# EUROPEAN PATENT APPLICATION

(11) **EP 4 471 188 A1**
(43) Date of publication of application: **04.12.2024**
(21) Application number: 23747124.8
(22) Date of filing: 27.01.2023
(51) Int. Cl.: C25B 11/081, B01J 23/89, C01B 3/02, C25B 1/04, C25B 9/75, C25B 11/093

(54) **NEGATIVE ELECTRODE FOR HYDROGEN GENERATION, NEGATIVE ELECTRODE FOR ALKALINE WATER ELECTROLYSIS, METHOD FOR PRODUCING NEGATIVE ELECTRODE, BIPOLAR ELECTROLYTIC CELL, ELECTROLYSIS CELL FOR ALKALINE WATER ELECTROLYSIS, AND METHOD FOR PRODUCING HYDROGEN**

(30) Priority: 28.01.2022 JP 2022012404
(71) Applicant: Asahi Kasei Kabushiki Kaisha, Tokyo 1000006 (JP)
(72) Inventor: NAKAJIMA Yasuhiro, Tokyo 100-0006 (JP); YOSHIDA Jun, Tokyo 100-0006 (JP); NAGATA Dai, Tokyo 100-0006 (JP); FUJIMOTO Norikazu, Tokyo 100-0006 (JP)
(74) Representative: dompatent von Kreisler Selting Werner - Partnerschaft von Patent- und Rechtsanwälten mbB
(86) International application number: PCT/JP2023/002762
(87) International publication number: WO 2023/145914

(57) **Abstract**

An object is to provide a cathode that maintains high energy conversion efficiency over a long period of time without increase in overvoltage even when hydrogen generation is repeatedly started and stopped. In order to achieve the above-mentioned object, the present disclosure is a cathode for generating hydrogen including a conductive substrate and a catalyst layer including, on a surface of the conductive substrate: at least one of Pt, a Pt oxide, and a Pt hydroxide; and at least one of a metal, an oxide, and a hydroxide of a lanthanoid element that becomes electrochemically stable as trivalent ions within the potential window of water of pH 7 or higher and pH 16 or lower. The molar ratio of the Pt element to the lanthanoid element (Pt:lanthanoid) in the catalyst layer is 95:5 to 65:35.

## Description

### TECHNICAL FIELD

The present disclosure relates to a cathode for generating hydrogen, a cathode for alkaline water electrolysis, a method of producing a cathode, a bipolar electrolytic cell, an electrolyzer for alkaline water electrolysis, and a method of producing hydrogen.

### BACKGROUND

In recent years, techniques utilizing renewable energy, such as wind power generation and photovoltaic power generation, have attracted attention in order to address issues including global warming due to greenhouse gases such as carbon dioxide, decrease in fossil fuel reserves, and the like.

The nature of renewable energy is that it is subject to very large fluctuations as its output depends on climatic conditions. It is thus not always possible to transport electric power obtained by electricity generation by renewable energy to the general electric power system, and there is concern about social influences such as imbalance of electricity supply and demand, destabilization of the electric power system, or the like.

Therefore, research is being conducted to convert the electric power generated from renewable energy into a form suitable for storage and transportation for utilization. Specifically, a study has been made on how to generate storable and transportable hydrogen by electrolysis of water using electric power generated from renewable energy, and to use hydrogen as an energy source or material.

Hydrogen is widely used industrially in the fields of, for example, petroleum refining, chemical synthesis, and metal refining, and in recent years, it can be used in many scenes such as hydrogen stations for fuel cell vehicles (FCVs), smart communities, and hydrogen power plants. Accordingly, there is high expectation for the development of technology to obtain, in particular, hydrogen from renewable energy.

Methods for electrolysis of water include solid polymer electrolyte water electrolysis, high-temperature steam electrolysis, and alkaline water electrolysis. Of these, alkaline water electrolysis is regarded as one of the most promising because of its industrialization over decades, large-scale availability, and inexpensiveness as compared to other water electrolysis devices.

However, for adaptation of alkaline water electrolysis as a means for storing and transporting energy, it is necessary to make it possible to conduct water electrolysis efficiently and stably using electric power with large fluctuations in output as described above, and it is required to address various issues associated with electrolytic cells and devices for alkaline water electrolysis.

In order to address the issue of improving the energy intensity for hydrogen production by suppressing the bath voltage in alkaline water electrolysis, it is known to be effective to use a structure in which the gap between the diaphragm and the electrodes is substantially eliminated, which is called a zero-gap structure, as the structure of the electrolytic cell (see PTL 1 and PTL 2). With the zero-gap structure, by rapidly escaping the generated gas through the pores of an electrode to the side opposite to the diaphragm side of the electrode, it is possible to reduce the distance between the electrode while minimizing gas accumulation near the electrode, thereby keeping bath voltage low. The zero-gap structure is very effective in suppressing bath voltage and is adopted in various electrolysis devices.

### CITATION LIST

### Patent Literature

PTL 1: JP5553605B
PTL 2: WO2015098058A

### SUMMARY

### (Technical Problem)

However, in the conventional cathodes for alkaline water electrolysis described in PTLs 1 and 2, it is necessary to repeat the positive current conduction to proceed intended electrolytic reaction and conduction of reverse current generated after stopping the positive current conduction, resulting in the problems of wearing out or delamination of a catalyst layer and increased overvoltage. For this reason, it is difficult for a variable power source such as renewable energy to maintain a high energy conversion efficiency over a long period.

Accordingly, an object of the present disclosure is to provide a cathode that maintains high energy conversion efficiency over a long period of time without an increase in overvoltage even when hydrogen generation is repeatedly started and stopped.

### (Solution to Problem)

Specifically, the present disclosure is as follows.
(1) A cathode for generating hydrogen comprising:
   a conductive substrate; and
   a catalyst layer containing, on a surface of the conductive substrate:
      at least one of Pt, a Pt oxide, and a Pt hydroxide; and
      at least one of a metal, an oxide, and a hydroxide of a lanthanoid element that becomes electrochemically stable as trivalent ions within a potential window of water of pH 7 or higher and pH 16 or lower,
   wherein a molar ratio of the Pt element to the lanthanoid element (Pt:lanthanoid) in the catalyst layer is 95:5 to 65:35.
(2) The cathode according to (1), being a cathode for alkaline water electrolysis.
(3) The cathode according to (1) or (2), wherein the catalyst layer contains the same element as that contained in the conductive substrate.
(4) The cathode according to any one of (1) to (3), wherein the catalyst layer comprises a first layer formed on the surface of the conductive substrate and a second layer formed on the first layer, the molar ratio of Pt and the lanthanoid element in the first layer being different from that in the second layer.
(5) The cathode according to (4), wherein a molar ratio of the lanthanoid element in the second layer is greater than the molar ratio of the lanthanoid element in the first layer.
(6) The cathode according to (4) or (5), wherein the first layer contains the same element as that contained in the conductive substrate.
(7) The cathode according to any one of (1) to (6), wherein a value of [IPt / (IPt + IPtO)] is 0.1 or more, where IPt represents a peak area of X-rays diffracted by the (111) plane of Pt metal and IPtO represents a peak area of X-rays diffracted by the (200) and (111) planes of PtO in the catalyst layer.
(8) The cathode according to any one of (1) to (7), wherein the lanthanoid element is at least one of Nd, Sm, Gd, Tb, and Dy.
(9) The cathode according to (8), wherein the lanthanoid element is Nd.
(10) The cathode according to any one of (1) to (9), wherein the conductive substrate contains Ni.
(11) The cathode according to (10), wherein the conductive substrate is a plain weave mesh of 20 mesh or more and 60 mesh or less woven with Ni fine wire having a wire diameter of 0.05 mm or more and 1.00 mm or less.
(12) The cathode according to (10), wherein the conductive substrate is Ni foil having a thickness of 100 µm or less.
(13) The cathode according to any one of (10) to (12), wherein the catalyst layer contains Pt, Nd, and Ni.
(14) The cathode according to (12), wherein the catalyst layer comprises the first layer containing Pt and Nd and the second layer containing Pt and Ni.
(15) The cathode according to any one of (1) to (14), wherein a loading amount of the catalyst layer is 4.5 g/m² or more and 20 g/m² or less.
(16) The cathode according to any one of (1) to (15), wherein a loading amount of the Pt element in the catalyst layer is 3.5 g/m² or more and 15 g/m² or less.
(17) The cathode according to any one of (1) to (16), wherein the catalyst layer contains a hydrogen storage alloy.
(18) The cathode according to (17), wherein the catalyst layer contains Pd.
(19) The cathode according to any one of (1) to (18), wherein an accumulated discharge amount until a potential reaches +1.12 V (vs. RHE) until a reduction current of 6 kA/m² is conducted for 1 hour and then an oxidation current of 15 A/m² is conducted is 1500 C/m² or more and 10000 C/m² or less.
(20) The cathode according to any one of (1) to (19), wherein an electric double layer capacitance is 0.01 F/cm² or more and 0.15 F/cm² or less.
(21) A method of producing a cathode according to the present disclosure, comprising the step of repeating the following twice or more times in sequence:
   an application step of applying a coating liquid containing at least a Pt compound and a lanthanoid compound to the conductive substrate;
   a precursor layer formation step of drying the coating liquid to form a precursor layer containing Pt and a lanthanoid on the conductive substrate; and
   a sintering step of heating the precursor layer in a temperature range of 300 °C to 800 °C to obtain a catalyst layer.
(22) A method of producing the cathode according to (4), comprising the steps of:
   performing a first step comprising repeating the following twice or more times in sequence:
      a first application step of applying a first coating liquid containing at least a Pt compound and a lanthanoid compound to the conductive substrate;
      a first precursor layer formation step of drying the first coating liquid to form a first precursor layer containing Pt and a lanthanoid on the conductive substrate; and
      a first sintering step of heating the first precursor layer in a temperature range of 300 °C to 800 °C to obtain the first layer, and
   after the first step, performing a second step comprising repeating the following twice or more times in sequence:
      a second application step of applying a second coating liquid containing at least the Pt compound and the lanthanoid compound in a molar ratio different from that in the first layer, on the conductive substrate having the first layer formed thereon;
      a second precursor layer formation step of drying the second coating liquid to form a second precursor layer containing Pt and the lanthanoid in a molar ratio different from that in the first layer, on the first layer; and
      a second sintering step of heating the second precursor layer in a temperature range of 300 °C to 800 °C to obtain a second layer.
(23) A method of producing the cathode according to (14), comprising the steps of:
   performing a first step comprising repeating the following twice or more times in sequence:
      a first coating step of applying a first coating liquid containing at least a Pt compound and Ni to the conductive substrate containing Ni;
      a first precursor layer formation step of drying the first coating liquid to form a first precursor layer containing Pt and Ni on the conductive substrate; and
      a first sintering step of heating the first precursor layer in a temperature range of 300 °C to 800 °C to obtain the first layer, and
   after the first step, performing a second step comprising repeating the following twice or more times in sequence:
      a second coating step of applying a second coating liquid containing at least a Pt compound and a Nd compound on the conductive substrate having the first layer formed thereon;
      a second precursor layer formation step of drying the second coating liquid to form a second precursor layer containing Pt and Nd on the first layer; and
      a second sintering step of heating the second precursor layer in a temperature range of 300 °C to 800 °C to obtain a second layer.
(24) A bipolar electrolytic cell comprising the cathode according to the present disclosure.
(25) The bipolar electrolytic cell according to (24), comprising
   the cathode and an anode,
   wherein an accumulated discharge amount until a potential reaches +0.12 V (vs. RHE) until an oxidation current of 6 kA/m² is conducted for 1 hour and then a reduction current of 15 A/m² is conducted to the anode is greater than the accumulated discharge amount until the potential reaches +1.12 V (vs. RHE) until an oxidation current of 6 kA/m² is conducted for 1 hour and then a reduction current of 15 A/m² is conducted to the cathode.
(26) The bipolar electrolytic cell according to (24), wherein the accumulated discharge amount until the potential reaches +0.12 V (vs. RHE) until an oxidation current of 6 kA/m² is conducted for 1 hour and then a reduction current of 15 A/m² is conducted to the anode is 10000 C/m² or more and 300000 C/m² or less.
(27) The bipolar electrolytic cell according to (24), wherein the anode contains Ni.
(28) An electrolyzer for alkaline water electrolysis, comprising:
   3 to 200 bipolar electrolytic cells according to the present disclosure, and
   at least one cathode terminal cell; and
   at least one anode terminal cell.
(8) A method of producing hydrogen, comprising electrolyzing water containing alkali using the electrolyzer for alkaline water electrolysis according to the present disclosure.
(29) A method of producing hydrogen, comprising electrolyzing water containing alkali using the electrolyzer for alkaline water electrolysis according to (28).
(30) The method of producing hydrogen according to (29), comprising producing hydrogen by electrolyzing the water containing alkali relying on a variable power supply in which positive current conduction and interruption of the positive current conduction are repeated.

### (Advantageous Effect)

According to the present disclosure, it is possible to provide a cathode that maintains high energy conversion efficiency over a long period of time without an increase in overvoltage even when hydrogen generation is repeatedly started and stopped.

### BRIEF DESCRIPTION OF THE DRAWINGS

In the accompanying drawings:
FIG. 1 is a side view generally illustrating an example of an electrolyzer for alkaline water electrolysis including a bipolar electrolytic cell according to the present embodiment;
FIG. 2 is a cross-sectional view illustrating the inside of an electrolytic cell in a portion enclosed by the broken line in FIG. 1 of the electrolyzer for alkaline water electrolysis including the bipolar electrolytic cell according to the present embodiment;
FIG. 3 illustrates the overview of an electrolysis device used in examples and comparative examples;
FIG. 4 illustrates the overview of an electrolyzer for alkaline water electrolysis used in electrolysis tests;
FIG. 5 is a cross-sectional view of the inside of the electrolytic cell in the region of the square frame X in the dashed-and-dotted line in FIG. 4, of the electrolyzer for alkaline water electrolysis used in the electrolysis tests;
FIG. 6 is a cross-sectional view of the inside of the electrolytic cell in the region of the square frame Y in the dashed-and-double-dotted line in FIG. 4, of the electrolyzer for alkaline water electrolysis used in the electrolysis tests;
FIG. 7 is a diagram illustrating an example of the discharge curves of the cathode and the anode of the examples obtained in the electrolysis tests;
FIG. 8 is a diagram illustrating the result of the cyclic voltammetry of the cathode of the examples obtained in the electrolysis tests;
FIG. 9 is a diagram illustrating the result of the cyclic voltammetry of the cathode of the comparative examples obtained in the electrolysis tests;
FIG. 10 is a diagram illustrating the X-ray photoelectron spectroscopy spectrum of the cathode of the examples obtained in the electrolysis tests;
FIG. 11 is a diagram illustrating the X-ray photoelectron spectroscopy spectrum of the cathode of the comparative examples obtained in the electrolysis tests;
FIG. 12 is a diagram illustrating an SEM image of the cathode of the examples obtained in the electrolysis tests;

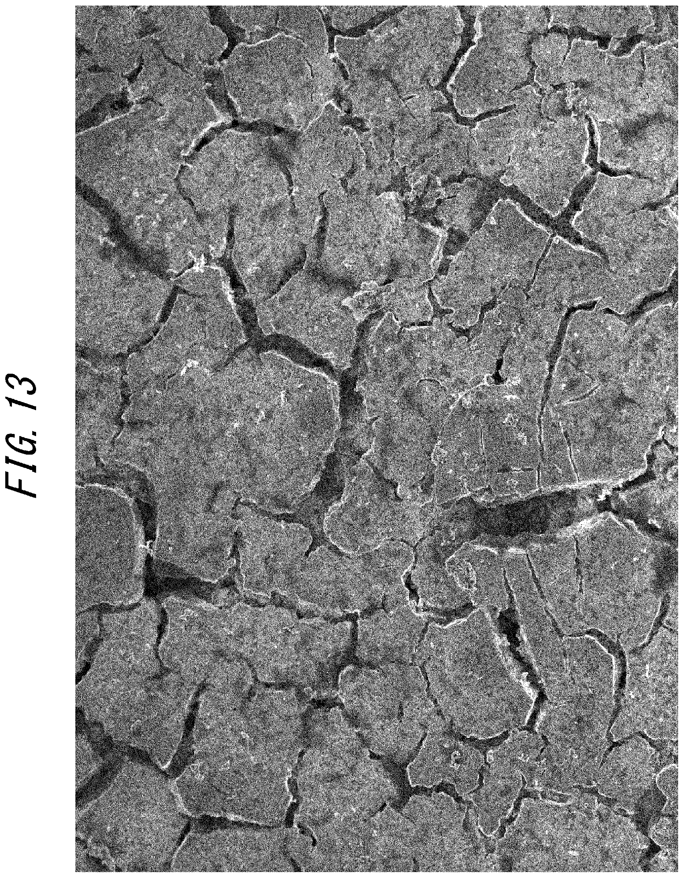

FIG. 13 is a diagram illustrating an SEM image of the cathode of the comparative examples obtained in the electrolysis tests;
FIG. 14 is a diagram illustrating an X-ray diffraction chart of the cathode of the examples; and
FIG. 15 is a diagram illustrating the discharge curve of the cathode, the discharge curve of the anode, and the attained potential.

### DETAILED DESCRIPTION

An embodiment of the present disclosure (hereinafter referred to as "the present embodiment") is described in detail below.

Note that the present embodiment is only representative of the present disclosure, and the present disclosure is not limited to the embodiment thereof. In other words, various changes or modifications may be made without departing from the spirit of the present disclosure.

### <Cathode for generating hydrogen and cathode for alkaline water electrolysis>

Cathodes of the present embodiment are a cathode for generating hydrogen and a cathode for alkaline water electrolysis including a conductive substrate and a catalyst layer on a surface of the conductive substrate.

In hydrogen production by alkaline water electrolysis, reduction of energy consumption, specifically, reduction of electrolytic voltage presents a significant challenge. Since the electrolytic voltage greatly depends on the hydrogen generation voltage of the cathode, the performance of the cathode is important.

In addition to the voltage required for the electrolysis of water that is theoretically determined, the bath voltage for alkaline water electrolysis also includes an overvoltage of an anode reaction (generating oxygen), an overvoltage of a cathode reaction (generating hydrogen), and a voltage dependent on the distance between the anode and the cathode. As used herein, the term "overvoltage" refers to a voltage that needs to be applied excessively beyond the theoretical decomposition voltage to cause a certain current flow, and its value depends on the current value. That is, by using electrodes with low overvoltage, hydrogen can be generated with lower power consumption.

In addition to the ability to maintain low overvoltage for a long period of time by improving the durability against reverse current, the cathode of the present embodiment is also effective in preventing corrosion of the substrate and the catalyst layer of the cathode, detachment of the catalyst layer, dissolution into the electrolyte, and adhesion of contained substances to the diaphragms, even in the case where an unstable current source such as renewable energy is used.

To achieve low overvoltage, the requirements for the cathode include high conductivity, high hydrogen generation ability, and high wettability of the electrolyte on the electrode surface. Since the cathode of the present embodiment includes a metal element such as Pt, it can meet these requirements.

In one aspect, the cathode contains, on a surface of the conductive substrate, at least one of Pt, a Pt oxide, and a Pt hydroxide (hereinafter collectively referred to as "Pt-based compound") and at least one of a metal, an oxide, and a hydroxide of a lanthanoid (hereinafter collectively referred to as "lanthanoid compound") that becomes electrochemically stable as trivalent ions within the potential window of water of pH 7 or higher and pH 16 or lower.

As mentioned above, the inclusion of the Pt-based compound in the catalyst layer can reduce the hydrogen generating overvoltage of the cathode. Furthermore, overvoltage can be further reduced when the catalyst layer contains a compound that can increase the electric double layer capacitance, which is a measure of the effective area used for electrolysis on the surface of the cathode. In order to maintain this effect of increasing the electric double layer capacitance over a long period of time, the element preferably does not dissolve in the electrolyte in an electrolysis environment, and is preferably electrochemically stable as a solid. Furthermore, it is preferable that the element does not undergo a valence change caused by electrochemical redox even when it is repeatedly exposed to reduction induced by positive current conduction and oxidation induced by the reverse current generated when conduction of the positive current is stopped. This is because if a valence change occurs, the crystal morphology would change every time a positive current is conducted and the conduction of a positive current is stopped. Repeated positive current conduction and interruption of the positive current conduction cause the physical collapse of the catalyst layer and induce an increase in overvoltage. As a result of our diligent study from these viewpoints, we have found that in order to maintain high energy conversion efficiency over a long period of time without an increase in overvoltage even when hydrogen generation is repeatedly started and stopped, it is preferable that the catalyst layer includes a lanthanoid element that becomes electrochemically stable as trivalent ions within the potential window of water of pH 7 or higher and pH 16 or lower.

For a description of the electrochemical stability of each element within the potential window of water of pH 7 or higher and pH 16 or lower, see Atlas of Electrochemical Equilibria in Aqueous Solutions (by Marcel Pourbaix, published by the National Association of Corrosion Engineers, 1974).

Specifically, when the lanthanoid compound that becomes electrochemically stable as trivalent ions within the potential window of water of pH 7 or higher and pH 16 or lower is added in addition to the Pt-based compound described above in the catalyst layer, degradation of the cathode can be suppressed and a high energy conversion efficiency can be maintained even when the electrolyzer is operated under a variable power supply.

In the cathode of the present embodiment, the molar ratio of Pt and the lanthanoid element (Pt:lanthanoid) in the catalyst layer is 95:5 to 65:35, preferably 90:10 to 70:30, and more preferably 85:15 to 73:27.

As the amount of the lanthanoid compound increases, the electric double layer capacitance increases, and the effects of reducing hydrogen generating overvoltage and improving reverse electric endurance are increased. On the other hand, since lanthanoid-based compounds, especially oxides and hydroxides, have low conductivity, containing the lanthanoid-based compound in an excessive amount inhibits the conductivity of the catalyst layer, resulting in high overvoltage. Therefore, in the present embodiment, by setting the molar ratio of the Pt and the lanthanoid element in the catalyst layer to the above range, the cathode overvoltage can be maintained at an even lower level even when the electrolyzer is operated under a variable power supply and a high energy conversion efficiency can be maintained over the long period of time.

Furthermore, the catalyst layer preferably contains the same element as that contained in the conductive substrate. This is because the affinity between the catalyst layer and the conductive substrate is improved, which prevents the catalyst layer from detaching from the substrate and thus increases the durability against reverse current.

Furthermore, the catalyst layer may have a laminated structure consisting of a first layer formed on the surface of the conductive substrate and a second layer formed on the first layer, in which the molar ratio of the Pt and lanthanoid element in the first layer is different from that in the second layer.

In the case where a laminated structure is adopted, it is preferable that the catalyst layer consists of a first layer formed on the surface of the conductive substrate and a second layer formed on the first layer, and the molar ratio of the lanthanoid element in the second layer is greater than that in the first layer. This is because when the lanthanoid element is added in a greater amount to the second layer, which is closer to the surface of the catalyst layer, the amount of lanthanoid element contributing to electrolysis increases, and the durability against reverse current is increased as compared to the case when the lanthanoid element is added in a greater amount to the first layer.

Furthermore, in the case where a laminated structure is adopted, the first layer preferably contains the same element as that contained in the conductive substrate. This is because the improved affinity between the first layer and the conductive substrate prevents the catalyst layer from detaching from the substrate and thus increases the durability against reverse current.

Furthermore, the value of [IPt / (IPt + IPtO)] is preferably 0.1 or more, where IPt represents the peak area of X-rays diffracted by the (111) plane of Pt metal and IPtO represents the peak area of X-rays diffracted by the (200) and (111) planes of the Pt oxide in the catalyst layer. Since Pt oxide is electrochemically reduced to the metal when subjected to hydrogen generating electrolysis, a higher ratio of metal crystals from the beginning results in less morphological change of the catalyst layer and higher durability.

The lanthanoid element that becomes electrochemically stable as trivalent ions within the potential window of water of pH 7 or higher and pH 16 or lower is not particularly limited, but from the viewpoint of keeping the cathode overvoltage lower over a long period of time, at least one selected from the group consisting of La, Nd, Pm, Sm, Gd, Tb, and Dy is preferred, at least one selected from the group consisting of Nd, Pm, Sm, Gd, Tb, and Dy is preferred, and Nd is particularly preferred.

The material forming the conductive substrate is not particularly limited, but from the viewpoint of both conductivity and durability, the material is preferably a transition metal. The transition metal is more preferably at least one selected from the group consisting of Ti, V, Cr, Mn, Fe, Co, Ni, Cu, Mo, Ru, Rh, Pd, Ag, Ir, Pt, and Au, even more preferably at least one selected from the group consisting of Ni, Ti, and Fe, and particularly preferably contains at least Ni.

Note that a single transition metal or an alloy or a mixture of two or more transition metals may be used as the material of the conductive substrate. In addition to transition metals, a typical element such as C, O, N, Si, P, and S may also be contained.

The cathode of the present embodiment is preferably a porous body from the viewpoint of using a larger surface area for electrolysis and removing the gas generated by electrolysis efficiently from the surface of the electrode. In particular, in the case of a zero-gap electrolyzer, it is necessary to remove the gas evolved from the back side of a surface of the cathode in contact with the diaphragm, and it is preferable that the surface opposite to the surface of the cathode in contact with the diaphragm penetrates.

From this viewpoint, the form of the conductive substrate is not particularly limited, but it is preferable to have pores through which air bubbles can penetrate, such as perforated metal, expanded metal, perforated foil, mesh produced by weaving metal wire, metal foam, sintered metal, metal fibers, and metal paper.

In addition, the above-mentioned effect of improving reverse current resistance becomes further increased when the conductive substrate is in a form without corners or projections. This is because corners or projections may be the starting point for interfacial detachment between the catalyst layer and the substrate.

Hence, it is preferable that the conductive substrate is a mesh that is made from metal wire without corners or projections, in other words, the shape of the metal wire in a cross-section perpendicular to the axial direction is circular or elliptical.

In the case where the conductive substrate has corners or projections as in an expanded metal, for example, such corners or projections would serve as the starting point of interfacial detachment of the catalyst layer, in which case the effect of improving durability against the reverse current of the present disclosure would be weakened.

In the case where a plain weave mesh is used for the conductive substrate, the size is not particularly limited, yet in order to achieve both an increase in electrolytic reaction site due to an increase in electrolytic surface area and efficient removal of gas generated by electrolysis from the electrode surface, the wire diameter is preferably 0.05 mm or more and 1.0 mm or less, and the pitch is preferably from 20 mesh or more and 60 mesh or less. More preferably, the wire diameter is 0.1 mm or more and 0.3 mm or less, and the pitch is 30 mesh or more and 50 mesh or less.

When a foil is used as the conductive substrate, the dimensions thereof are not limited, but it is preferably flexible to further enhance the effect of the zero-gap structure on improvement in electrolytic efficiency, and a thickness of 100 µm or less is preferred, 60 µm or less is more preferred, and 40 µm or less is more preferred.

Furthermore, the loading amount of the catalyst layer is preferably 4.5 g/m² or more and 20 g/m² or less, more preferably 5.0 g/m² or more and 15 g/m² or less, and even more preferably 6.0 g/m² or more and 10 g/m² or less. When the loading amount of the catalyst layer is 4.5 g/m² or more, the overvoltage can be further lowered and the durability against reverse current can be further enhanced, and when the loading amount of the catalyst layer is set to 20 g/m² or less, the delamination of the catalyst layer due to the decrease in mechanical strength of the catalyst layer and the increase in overvoltage due to the decrease in conductivity of the catalyst layer can be suppressed.

Furthermore, the catalyst layer contains Pt element and the lanthanoid element, and preferably contains Pt, Nd as the lanthanoid element, and Ni.

In the case where the catalyst layer has a laminated structure, the catalyst layer more preferably consists of a first layer containing Pt and Nd, and a second layer containing Pt and Ni.

Still furthermore, the loading amount of the Pt element in the catalyst layer is preferably 3.5 g/m² or more and 15 g/m² or less, more preferably 4.0 g/m² or more and 10 g/m² or less, and even more preferably 5.0 g/m² or more and 7.0 g/m² or less. When the loading amount of the Pt element in the catalyst layer is 3.5 g/m² or more, the overvoltage can be further lowered and the durability against reverse current can be further enhanced, and when the loading amount of the Pt element in the catalyst layer is 15 g/m² or less, the delamination of the catalyst layer due to the decrease in mechanical strength of the catalyst layer and the increase in overvoltage due to the decrease in conductivity of the catalyst layer can be suppressed.

The average thickness of the catalyst layer is not limited, but is preferably 0.30 µm or more. This is because, when the average thickness of the catalyst layer is set to 0.30 µm or more, it is possible to reduce cracks of the conductive substrate penetrating the catalyst layer perpendicularly to the conductive substrate, to reduce the surface area of the conductive substrate in contact with the electrolyte, and to suppress delamination of the catalyst layer at the interface between the catalyst layer and the conductive substrate due to redox caused by reverse current.

On the other hand, when the average thickness of the catalyst layer is too high, the mechanical strength would decrease and the catalyst layer would be more likely to physically peel off. Hence, the average thickness of the catalyst layer is preferably 10 µm or less.

From a similar viewpoint, the average thickness of the catalyst layer is more preferably 0.5 µm or more and 5 µm or less, and even more preferably 0.7 µm or more and 4 µm or less.

In addition, it is also more preferable that the catalyst layer contains a hydrogen storage alloy. The inclusion of the hydrogen storage alloy allows hydrogen generated by electrolysis to be retained as atomic hydrogen in the catalyst layer. The reducing power of the atomic hydrogen promotes the reduction of the oxide layer of the substrate by positive current conduction and suppresses the growth of the oxide layer of the substrate by reverse current, thereby suppressing the morphological changes caused by redox of the substrate and improving durability against reverse current.

The hydrogen storage alloy is not limited, but Pd is preferred due to its electrochemical stability.

Furthermore, for the cathode of the present embodiment, the accumulated discharge amount until the potential reaches +1.12 V (vs. RHE) until a reduction current of 6 kA/m² is conducted for 1 hour and then an oxidation current of 15 A/m² is conducted is 1500 C/m² or more and 10000 C/m² or less. This is because an accumulated discharge amount in the above range slows down the speed at which the potential of the cathode is changed to be noble by the reverse current, thereby reducing the potential change stress on the cathode and the resultant degradation.

The effective area used for electrolysis on the surface of the cathode can be obtained in a pseudo manner by measuring the electric double layer capacitance formed at the interface between the cathode and the electrolyte.

Note that the electric double layer capacitance can be measured by, for example, the electrochemical impedance method or the cyclic voltammetry method. In the former method, the electric double layer capacitance is calculated by analyzing the Cole-Cole plot obtained by plotting real and imaginary components from AC impedance measurements using equivalent circuit fitting. In the latter method, cyclic voltammetry is measured at several levels of potential sweep rate in the potential region where Faraday current does not occur in the cathode, the value of non-Faraday current at a certain potential obtained versus sweep rate is plotted, and the electric double layer capacitance is calculated from the slope.

From the viewpoint of increasing the effective area used for electrolysis and reducing the hydrogen generating overvoltage, the cathode of the present embodiment preferably has an electric double layer capacitance of 0.001 F/cm² or more and 0.15 F/cm² or less, as calculated by the cyclic voltammetry method. Furthermore, from the viewpoint of ensuring an electric double layer capacitance sufficient to maintain a low overvoltage even if the catalyst is depleted or delaminated due to positive current conduction and the reverse current caused by interruption of the positive current conduction, the electric double layer capacitance calculated by the cyclic voltammetry method is more preferably 0.02 F/cm² or more and 0.15 F/cm² or less, and particularly preferably 0.03 F/cm² or more and 0.15 F/cm² or less.

Furthermore, the coating resistance of the cathode of the present embodiment is preferably 2 Ω·cm² or less, and more preferably 0.5 Ω·cm² or less. If the coating resistance of the cathode is excessively high, the overvoltage is increased when electrolysis is performed under conditions of high current density in order to obtain high energy efficiency.

The coating resistance can be measured by, for example, an electrochemical impedance method. The coating resistance is calculated by analyzing the Cole-Cole plot obtained by plotting real and imaginary components from AC impedance measurements using equivalent circuit fitting.

Examples of the method by which the catalyst layer may be formed on the conductive substrate to form the cathode include plating; spraying methods such as plasma spraying; the thermal decomposition method including applying a precursor layer solution onto the conductive substrate and subsequently performing heating; the method including mixing a catalyst substance with a binder component and immobilizing it on a substrate; and vacuum film-forming methods such as sputtering.

With the thermal decomposition method, it is possible to form a thin layer having a uniform thickness on a porous substrate. It is thus possible to coat the surface of the conductive substrate with a small amount of raw material in an efficient way.

When the thermal decomposition method is used, the method preferably comprises a precursor layer formation step of forming a precursor layer on a surface of the conductive substrate; and a sintering step of forming a catalyst layer by heating the conductive substrate having the precursor layer formed on the surface thereof thereby decomposing the precursor layer.

The precursor layer formation step includes, for example, applying and drying a liquid containing a metal element on the surface of the substrate.

Examples of the metal element include Pt, lanthanoids, Pt group elements described above. The metal in the coating liquid is not limited to a particular form, and may be in the form of fine particles of a metal or a metal compound, or may be dissolved and ionized. In the form of fine particles, the metal is preferably dispersed in the liquid in order to form a homogeneous precursor layer. Accordingly, the particle size is preferably 100 nm or less. When it is ionized, examples of the metal salt include: inorganic compound salts such as halide salts, e.g., fluoride, chloride, bromide, and iodide, nitrate, sulfate, and phosphate; and organic compound salts represented by acetate. Among these preferred are chlorides and nitrates since the raw materials are industrially available. In addition, nitrate is more preferable because degradation of the substrate caused by anion components remaining after decomposition of nitrate is smaller, making it possible to provide an electrode with good storage stability.

The solvent of the solution may be any solvent as long as it can dissolve a solute such as a metal salt. Since the ability to prepare a high-concentration solution contributes to increasing the coating amount and improving productivity, it is preferable that the solvent contains water or at least one of alcohols having 2 to 5 carbon atoms. When the concentration of the metal salt in the solution is low, much energy is required for the volatilization of the solvent. On the other hand, a high concentration of the metal salt may introduce non-uniformity, causing unevenness in the thickness of the catalyst layer. Therefore, the concentration of the metal salt of the coating liquid used in the precursor layer formation step is preferably 0.001 mol/L or more and 1 mol/L or less, and more preferably 0.01 mol/L or more and 0.5 mol/L or less.

In the precursor layer formation step, the liquid containing a metal element may be applied to the surface of the conductive substrate with various known methods. Examples of such methods include: a dipping method that includes dipping a substrate in a liquid; a method that includes applying a liquid to a substrate with a brush; a roll method that includes applying a liquid impregnated in a sponge-like roll to a substrate; and an electrostatic coating method that includes where the coating liquid and the substrate are charged with opposite polarities and sprayed using a spray or the like. In particular, from the perspectives of productivity and uniform coating in the catalyst layer, a roll method and an electrostatic coating method are suitably used.

Prior to the application of the solution, surface treatment may be carried out to provide irregularities on the surface of the conductive substrate. By providing irregularities on the surface of the substrate, adhesion between the substrate and the catalyst layer is improved. The surface treatment is not limited to a particular method. For example, blasting or etching with a chemical solution may be used.

The temperature at which the catalyst layer is formed in the sintering step is not particularly limited as long as it is not lower than the thermal decomposition temperature of the metal salt used, yet is preferably 300 °C or higher. The reason is that the thermal decomposition of many metal salts proceeds at 300 °C or higher. The temperature is preferably 400 °C or higher, and more preferably 500 °C or higher, in order to allow thermal decomposition to proceed satisfactorily and to remove unreacted substances. When sintering is performed at a temperature above 800 °C, the substrate softens and may deform. The temperature is thus preferably 800 °C or lower, and more preferably 600 °C or lower.

The precursor layer formation step and the sintering step are preferably repeated more than once. In order to form a catalyst layer having a desired thickness, it is possible to adjust only the amount of coating liquid per coating cycle or the concentration of the metal salt in the liquid, yet if the amount of liquid applied per coating cycle or the metal concentration in the liquid is excessively increased, non-uniformity may be introduced such that each layer may not be uniformly formed. Therefore, by repeating the precursor layer formation step and the sintering step more than once, it is possible to form a more uniform catalyst layer with the desired thickness. The number of repetitions is not particularly limited as long as a desired thickness can be obtained, yet it is preferably 5 or more.

After repeating the precursor layer formation step and the sintering step more than once, the method may further comprise the step of performing sintering at a temperature at or above the temperature for the sintering step. At this time, the upper limit of the sintering temperature is preferably 800 °C or less, and more preferably 600 °C or less.

In the present embodiment, the characteristics of the cathode for generating hydrogen and the cathode for alkaline water electrolysis described above may be used alone or in combination.

### <Method of producing cathode>

There is no particular limitation on a method of producing the cathode of the present embodiment. For example, it can be produced by the following production method.

A method of producing a cathode including the step of repeating the following twice or more times in sequence:
an application step of applying a coating liquid containing at least a Pt compound and a lanthanoid compound to the conductive substrate;
a precursor layer formation step of drying the coating liquid to form a precursor layer containing Pt and a lanthanoid on the conductive substrate; and
a sintering step of heating the precursor layer in a temperature range of 300 °C to 800 °C to obtain a catalyst layer.

In addition, the following production method may also be used as the method of producing the cathode of the present embodiment.

A method of producing a cathode including:
performing a first step comprising repeating the following twice or more times in sequence:
   a first application step of applying a first coating liquid containing at least a Pt compound and a lanthanoid compound to the conductive substrate;
   a first precursor layer formation step of drying the first coating liquid to form a first precursor layer containing Pt and a lanthanoid on the conductive substrate; and
   a first sintering step of heating the first precursor layer in a temperature range of 300 °C to 800 °C to obtain the first layer, and
   after the first step, performing a second step comprising repeating the following twice or more times in sequence:
      a second application step of applying a second coating liquid containing at least the Pt compound and the lanthanoid compound in a molar ratio different from that in the first layer, on the conductive substrate having the first layer formed thereon;
      a second precursor layer formation step of drying the second coating liquid to form a second precursor layer containing Pt and the lanthanoid in a molar ratio different from that in the first layer, on the first layer; and
      a second sintering step of heating the second precursor layer in a temperature range of 300 °C to 800 °C to obtain a second layer.

In addition, the following production method may be used as the method of producing the cathode of the present embodiment.

A method of producing a cathode including:
performing a first step comprising repeating the following twice or more times in sequence:
   a first coating step of applying a first coating liquid containing at least a Pt compound and Ni to the conductive substrate containing Ni;
   a first precursor layer formation step of drying the first coating liquid to form a first precursor layer containing Pt and Ni on the conductive substrate; and
   a first sintering step of heating the first precursor layer in a temperature range of 300 °C to 800 °C to obtain the first layer, and
after the first step, performing a second step comprising repeating the following twice or more times in sequence:
   a second coating step of applying a second coating liquid containing at least a Pt compound and a Nd compound on the conductive substrate having the first layer formed thereon;
   a second precursor layer formation step of drying the second coating liquid to form a second precursor layer containing Pt and Nd on the first layer; and
   a second sintering step of heating the second precursor layer in a temperature range of 300 °C to 800 °C to obtain a second layer.

### <Bipolar electrolytic cell and electrolyzer for alkaline water electrolysis>

The bipolar electrolytic cell of the present embodiment includes the cathode of the present embodiment described above.

Since the cathode of the present embodiment is included, a high energy conversion efficiency can be maintained over a long period of time without an increase in overvoltage even when hydrogen generation is repeatedly started and stopped.

In addition, the electrolyzer for alkaline water electrolysis of the present embodiment includes 3 to 200 bipolar electrolytic cells of the present embodiment, at least one cathode terminal cell, and at least one anode terminal cell.

By configuring an electrolyzer using the electrolyzer for alkaline water electrolysis of the present embodiment, a high energy conversion efficiency can be maintained over a long period of time without an increase in overvoltage even when hydrogen generation is repeatedly started and stopped.

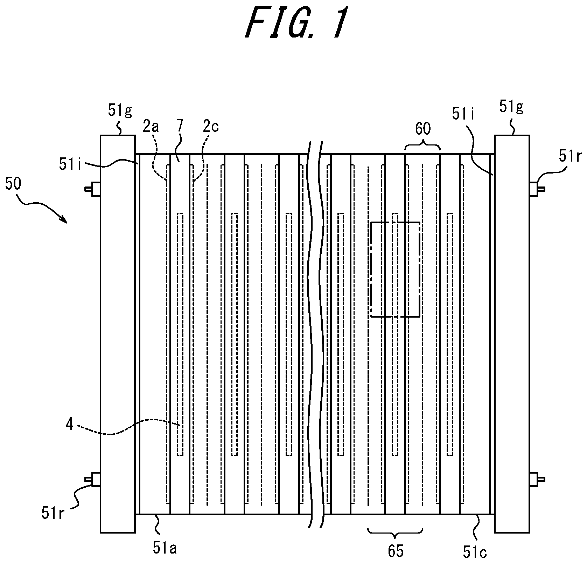

FIG. 1 is a side view generally illustrating an example of an electrolyzer for alkaline water electrolysis including a bipolar electrolytic cell of the present embodiment.

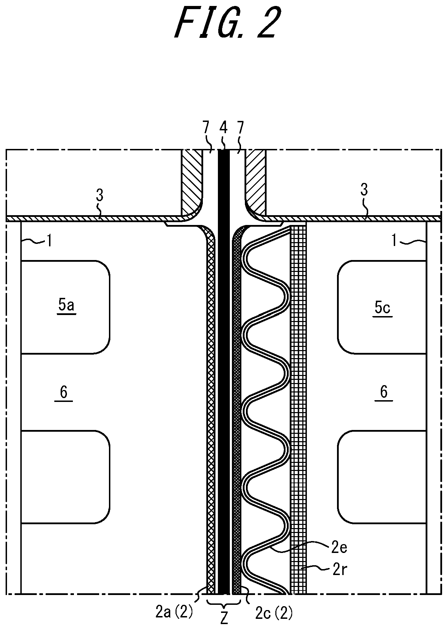

FIG. 2 illustrates a zero-gap structure (a cross-sectional view of a portion enclosed by the broken line in FIG. 1) of an example of an electrolyzer for alkaline water electrolysis including a bipolar electrolytic cell of the present embodiment.

As illustrated in FIGS. 1 and 2, an electrolyzer for alkaline water electrolysis 50 of the present embodiment is preferably an electrolyzer for alkaline water electrolysis comprising: an anode 2a; a cathode 2c; a partition wall 1 separating the anode 2a from the cathode 2c; and an outer frame 3 bordering the partition wall 1, in which a plurality of elements 60 are overlapped one another with a diaphragm 4 interposed therebetween.

Further, in the electrolyzer for alkaline water electrolysis 50 of the present embodiment, the diaphragm 4 is in contact with the anode 2a and the cathode 2c to form a zero-gap structure Z (see FIG. 2).

The electrolyzer for alkaline water electrolysis of the present embodiment may be a monopolar type or a bipolar type, and may be an electrolyzer for alkaline water electrolysis in which bipolar elements are stacked on top of one another via the corresponding diaphragms.

The monopolar type is a type of directly connecting each of one or more elements to a power supply, while the bipolar type is a type of arranging a large number of bipolar elements in series and connecting elements at both ends to a power supply.

In the present embodiment, as illustrated in FIG. 1, the electrolyzer for alkaline water electrolysis 50 is formed by stacking a required number of bipolar elements 60.

In the example of the electrolyzer for alkaline water electrolysis 50 illustrated in FIG. 1, a fast head 51g, an insulating plate 51i, and an anode terminal element 51a are arranged in order from one end, and an anode-side gasket portion, a diaphragm 4, a cathode-side gasket portion, and a bipolar element 60 are arranged side by side in this order. In this case, each bipolar element 60 is arranged such that the corresponding cathode 2c faces toward the anode terminal element 51a side. Components from anode-side gasket portions up to bipolar elements 60 are repeatedly arranged as many times as required for the designed production quantity. After the required number of components from anode gaskets up to bipolar elements 60 are repeatedly arranged, an anode-side gasket portion, a diaphragm 4, and a cathode-side gasket portion are arranged again, and finally a cathode terminal element 51c, an insulating plate 51i, and a loose head 51g are arranged in this order. All of these components are tightened together with a tie rod 51r to provide an electrolyzer for alkaline water electrolysis 50.

The arrangement of the electrolyzer for alkaline water electrolysis 50 can be arbitrarily selected from either the anode side or the cathode side and is not limited to the above order.

As illustrated in FIG. 1, in the electrolyzer for alkaline water electrolysis 50, the bipolar elements 60 are arranged between the anode terminal element 51a and the cathode terminal element 51c, and the diaphragms 4 are arranged between the anode terminal element 51a and a bipolar element 60, between bipolar elements 60 arranged adjacent to each other, and between a bipolar element 60 and the cathode terminal element 51c, respectively.

In the electrolyzer for alkaline water electrolysis 50 of the present embodiment, as illustrated in FIG. 2, the diaphragm 4 is in contact with the anode 2a and the cathode 2c so as to form a zero-gap structure Z.

In particular, in the electrolyzer for alkaline water electrolysis 50 in the present embodiment, a portion between the partition walls 1 of two adjacent bipolar elements 60 and a portion between the partition walls 1 of each terminal element and the adjacent bipolar element 60 are respectively referred to as an electrolytic cell 65. Each electrolytic cell 65 includes a partition wall 1, an anode compartment 5a and an anode 2a of one element; a diaphragm 4; and a cathode 2c, a cathode compartment 5c, and a partition wall 1 of the other element.

In alkaline water electrolysis, when there is a gap between the diaphragm 4 and the anode 2a and the cathode 2c, a large amount of bubbles generated by electrolysis is accumulated in this portion along with the electrolyte, leading to a significant increase in electric resistance. In order to greatly reduce the bath voltage in each electrolytic cell 65, it is effective to minimize the distance between the anode 2a and the cathode 2c (hereinafter also referred to as the "inter-electrode distance") to eliminate the influence of the electrolyte and bubbles present between the anode 2a and the cathode 2c.

Therefore, a zero-gap structure is adopted. The zero-gap structure can maintain a state in which the anode 2a and the diaphragm 4 are in contact with each other, and so are the cathode 2c and the diaphragm 4, over the entire surfaces of the electrodes, or a state in which the distance between the electrodes is substantially the same as the thickness of the diaphragm 4 such that there is almost no gap between the anode 2a and the diaphragm 4 and between the cathode 2c and the diaphragm 4.

In the electrolyzer for alkaline water electrolysis 50 in the present embodiment, as illustrated in FIG. 2, the partition walls 1, the outer frames 3, and the diaphragm 4 define electrode compartments 5 through which the electrolyte passes.

A header pipe for distributing or collecting an electrolyte that is attached to the electrolyzer for alkaline water electrolysis 50 illustrated in FIGS. 1 and 2 is typically disposed as an internal header or an external header. In the present disclosure, however, no limitation is placed on the type of header pipe and either type may be used.

The following provides a description of details of the components of the bipolar electrolytic cell and the electrolyzer for alkaline water electrolysis of the present embodiment.

In addition, in the following, preferred embodiments for enhancing the effect of the present disclosure are also described in detail.

### (Partition wall)

Each partition wall 1 is preferably provided between a cathode 2c and an anode 2a, and between an anode 2a and a cathode current collector 2r, and/or between a cathode 2c and an anode current collector 2r.

In the present embodiment, the shape of each partition wall may be a plate-like shape having a predetermined thickness, yet is not particularly limited.

The shape of each partition wall in a plan view is not particularly limited, and it may be a rectangular shape (such as a square or a rectangle) or a circular shape (such as a circle or an ellipse), where a rectangular shape may have a rounded corner.

The size of each partition wall is not particularly limited, and may be appropriately designed according to the size of the electrode compartment.

In addition, from the viewpoint of achieving a uniform supply of electric power, each partition wall is preferably made of a material having high conductivity, and from the perspectives of alkali resistance and heat resistance, preferred materials contain nickel, nickel alloy, mild steel, and nickel alloy plated with nickel.

### (Electrode)

The size of each electrode is not particularly limited and may be determined according to the size of the electrode compartment; it may be 0.4 m to 4.0 m in length, 0.4 m to 6.0 m in width, and 0.1 mm to 3 mm in thickness.

As an electrode in the bipolar electrolytic cell of the present embodiment, in order to increase the surface area used for electrolysis and to efficiently remove gas generated by electrolysis from the electrode surface, it is preferable that at least one of the anode or the cathode is a porous body, and it is more preferable that both of the anode and the cathode are porous bodies. In particular, in the case of a zero-gap electrolyzer, it is necessary to remove the gas evolved from the back side of a surface of an electrode in contact with the diaphragm, it is preferable that the surface of the electrode in contact with the diaphragm and the opposite surface penetrate each other.

Preferably, the anode includes a porous metal body. The catalyst layer carried on the electrode becomes a porous body and the electrolytic effective area is increased, making it possible to lower the voltage.

Examples of the porous body include meshes such as plain weave and twill weave, punching metal, expanded metal, metal foam, and the like.

In the case of using a punching metal, the size is not particularly limited, yet in order to achieve both an increase in gas generation amount due to an increase in electrolytic surface area and efficient removal of gas generated by electrolysis from the electrode surface, and from the viewpoint of mechanical strength, it is preferable that the hole diameter is 2 mm or more and 8 mm or less, the pitch is 2 mm or more and 10 mm or less, the aperture ratio is 20 % or more and 80 % or less, and the thickness is 0.5 mm or more and 2 mm or less.

In the case of using an expanded metal, the size is not particularly limited, yet in order to achieve both an increase in gas generation amount due to an increase in electrolytic surface area and efficient removal of gas generated by electrolysis from the electrode surface, and from the viewpoint of mechanical strength, it is preferable that the short way of mesh (SW) is 2 mm or more and 5 mm or less, the long way of mesh (LW) is 3 mm or more and 10 mm or less, the thickness is 0.5 mm or more and 2 mm or less, and the aperture ratio is 20 % or more and 80 % or less.

In the case of using a metal foam, the size is not particularly limited, yet in order to achieve both an increase in gas generation amount due to an increase in electrolytic surface area and efficient removal of gas generated by electrolysis from the electrode surface, and from the viewpoint of mechanical strength, it is preferable that the aperture ratio is 80 % or more and 95 % or less and the thickness is 0.5 mm or more and 2.0 mm or less.

The material of the substrate is not limited, but the substrate preferably contains mild steel, stainless steel, Ni, or a Ni-based alloy due to the resistance to the operating environment, and more preferably contains Ni.

Each anode has apertures, and in order to efficiently remove the gas generated by electrolysis from the surface of the anode, the aperture ratio is preferably 30 % or more and 70 % or less.

The catalyst layer of each anode preferably has a high oxygengenerating ability, and it is possible to use, for example, Ni, Co, Fe, or a Pt group element. In order to realize the desired activity and durability, the catalyst layer can be formed as a simple substance of a metal, a compound such as an oxide, a complex oxide or alloy composed of a plurality of metal elements, or a mixture thereof. Specific examples contain Ni plating, alloy plating of Ni and Co, Ni, or Fe, and the like, complex oxides including Ni and/or Co such as LaNiO₃, LaCoO₃, and NiCo₂O₄, compounds of Pt group elements such as Ir oxide, carbon materials such as graphene, and the like. Organic substances such as polymers may be contained in order to improve durability and adhesion to the substrate.

### (Outer frame)

Although the shape of each outer frame 3 in the bipolar electrolytic cell of the present embodiment is not particularly limited as long as it can border the corresponding partition walls 1, each outer frame 3 may have an inner surface extending over the periphery of each partition wall 1 along the direction perpendicular to the plane of each partition wall 1.

The shape of each outer frame is not particularly limited, and may be appropriately determined according to the shape of the partition walls in plan view.

The size of each outer frame is not particularly limited, and it may be designed according to the external dimensions of the electrode compartment.

As a material of each outer frame, a material having conductivity is preferable, and from the perspectives of alkali resistance and heat resistance, the following materials are preferred: nickel, nickel alloy, mild steel, and nickel alloy plated with nickel.

### (Diaphragm)

As the diaphragm 4 used in each bipolar electrolytic cell 65 of the present embodiment, an ion permeable membrane is used in order to isolate the generated hydrogen gas and oxygen gas while conducting ions. For this ion permeable membrane, it is possible to use an ion exchange membrane having ion exchange ability and a porous membrane capable of permeating the electrolyte. The ion permeable membrane preferably has low gas permeability, high ionic conductivity, low electron conductivity, and high strength.

A porous membrane has a plurality of fine through-holes, and has a structure that permits the electrolyte to pass through the diaphragm. Control of the porous structure such as pore size, porosity, and hydrophilicity is very important since the electrolyte permeates into the porous membrane to develop ion conduction. On the other hand, the porous membrane is required to prevent not only the electrolyte but also the generated gas from passing therethrough, that is, to have gas barrier properties. From this viewpoint control of the porous structure is also important.

The porous membrane has a plurality of fine through-holes, and may be, for example, a polymeric porous membrane, an inorganic porous membrane, a woven fabric, or a nonwoven fabric. These may be prepared with known techniques.

Examples of ion exchange membranes that may be used include cation exchange membranes that allow selective permeation of cations and anion exchange membranes that allow selective permeation of anions. Either type of ion exchange membrane may be used.

Known materials may be used as the material of the ion exchange membrane without any particular limitations. For example, a fluorine-containing resin or a modified resin of a polystyrene-divinylbenzene copolymer can suitably be used. In particular, a fluorine-containing ion exchange membrane is preferable due to excelling in terms of heat resistance, chemical resistance, and the like.

In addition, in each zero-gap electrolytic cell 65, as a means for reducing the distance between the electrodes, it is preferable to dispose a spring, which is an elastic body 2e, between an electrode 2 and the corresponding partition wall 1 to support the electrode with the spring. For example, in a first example, a spring made of a conductive material may be attached to the partition wall 1, and the electrode 2 may be attached to the spring. In a second example, a spring may be attached to electrode ribs 6 which are attached to the partition wall 1, and the electrode 2 may be attached to the spring. In the case of adopting such a configuration using an elastic body, it is necessary to appropriately adjust the strength of the spring, the number of springs, the shape, and the like, as necessary, so as not to introduce non-uniformity in the pressure of the electrode against the diaphragm.

Further, by strengthening the rigidity of the other electrode paired with the electrode supported via the elastic body (for example, by making the rigidity of the anode stronger than the rigidity of the cathode), the other electrode is structured to have less deformation even when pressed. On the other hand, the electrode supported via the elastic body has a flexible structure capable of deforming when pressed upon the diaphragm such that irregularities due to fabrication accuracy of the electrolyzer, deformation of the electrode, and the like can be absorbed, and a zero-gap structure can be maintained.

The above-described zero-gap structure Z includes those formed between the anode terminal element 51a and an element, between elements, and between an element and the cathode terminal element 51c.

In each bipolar electrolytic cell 65 of the present embodiment, as illustrated in FIG. 2, it is preferable that a conductive elastic body 2e and a cathode current collector 2r are interposed between the cathode 2c and the partition 1 such that the conductive elastic body 2e is sandwiched between the cathode 2c and the cathode current collector 2r. Further, it is preferable that the cathode current collector 2r is in contact with the rib 6 of the cathode.

As illustrated in FIG. 2, the zero-gap structure Z of each bipolar electrolytic cell 65 for alkaline water electrolysis of the present embodiment is preferably configured such that: one bipolar element 60 in which an anode rib 6 and an anode 2a are stacked in the stated order on the anode 2a side of the partition wall 1 and another bipolar element 60 in which a cathode rib 6, a cathode current collector 2r, a conductive elastic body 2e, and a cathode 2c are stacked in the stated order on the cathode 2c side are stacked with a diaphragm 4 interposed therebetween; and the diaphragm 4 is in contact with the anode 2a and the cathode 2c.

### (Current collector)

Examples of the current collector include a cathode current collector and an anode current collector.

The current collector transmits electricity to the conductive elastic body and the electrode stacked thereon, supports the loads received from them, and has the role of allowing the gas generated from the electrodes to pass through to the partition wall successfully. The current collector is thus preferably formed as an expanded metal, a punched porous plate, or the like. In this case, the aperture ratio of the current collector is preferably within a range allowing the hydrogen gas generated from the electrode to be extracted to the partition wall side without any problems. However, if the aperture ratio is too high, the strength or the conductivity of the conductive elastic body may be lowered. If it is too small, the gas escape may be deteriorated.

Nickel, nickel alloy, stainless steel, mild steel, and the like can be used as the material of the current collector from conductivity and alkali resistance perspectives, yet from the viewpoint of corrosion resistance, nickel, mild steel, stainless steel, and nickel alloy plated with nickel are preferred.

### (Electrically conductive member)

It is essential that the conductive elastic body is provided between the current collector and the electrode and is in contact with the current collector and the electrode, and that the conductive elastic body allows the electricity to be transmitted to the electrode and does not hinder the diffusion of the gas generated from the electrode. This is because if the diffusion of gas is hindered, the electrical resistance increases and the area of the electrode used for electrolysis decreases, resulting in lower electrolysis efficiency. The most important role is to bring the diaphragm and the electrode into close contact with each other by evenly applying appropriate pressure to the electrode so as not to damage the diaphragm.

### (Electrode compartment)

In the electrolyzer for alkaline water electrolysis 50 in the present embodiment, as illustrated in FIG. 2, the partition walls 1, the outer frames 3, and the diaphragm 4 define electrode compartments 5 through which the electrolyte passes. In this case, across the partition wall 1, one electrode compartment 5 on the anode side is an anode compartment 5a, and the other on the cathode side is a cathode compartment 5c.

### (Rib)

In the bipolar electrolytic cell 65 of the present embodiment, it is preferable that each rib 6 is physically connected to the corresponding electrode 2. With this configuration, each rib 6 serves as a support for the corresponding electrode 2, making it easier to maintain the zero-gap structure Z. It is also preferable that each rib 6 is electrically connected to the corresponding partition wall 1.

The above example of the bipolar electrolytic cell adopts a structure such that the cathode rib, the cathode current collector, the conductive elastic body, and the cathode are stacked in the stated order in the cathode compartment, and the anode rib and the anode are stacked in the stated order in the anode compartment. The present disclosure is not so limited, however, and a structure of "anode rib/anode current collector/conductive elastic body/anode" may be used in the anode compartment.

Generally, a conductive metal is used as the material of the ribs. For example, nickel-plated mild steel, stainless steel, nickel, or the like may be used. It is particularly preferable that the material of the ribs is the same as that of the partition walls. The most preferred material of the ribs is nickel.

### (Gasket)

In the bipolar electrolytic cell 65 of the present embodiment, as illustrated in FIG. 2, it is preferable that a gasket 7 is sandwiched between the outer frames 3 bordering the partition walls 1 together with the diaphragm 4.

The gasket 7 is used for providing a seal against the electrolyte and generated gas between the bipolar element 60 and the diaphragm 4 and between the bipolar elements 60, and to prevent leakage of the electrolyte and generated gas to the outside of the electrolyzer and gas mixture between the bipolar compartments.

The gasket is generally configured with a quadrangular or annular shape obtained by hollowing out the electrode surface in conformity with the surface of the element (such as a bipolar element, an anode terminal element, or a cathode terminal element) contacting the frame body. A diaphragm can be stacked between elements by sandwiching the diaphragm with two such gaskets. Furthermore, it is also preferable that the gasket comprises a slit portion capable of accommodating the diaphragm so as to be able to hold the diaphragm, and the gasket is provided with an opening that allows the accommodated diaphragm to be exposed on both surfaces of the gasket. In this way, the gasket can accommodate the edge portion of the diaphragm in the slit portion and cover the end face of the edge portion of the diaphragm. This configuration can more reliably prevent leakage of the electrolyte or gas from the end face of the diaphragm.

The material of the gasket is not particularly limited, and a known rubber material, resin material, or the like having insulation properties may be selected.

Specific examples of such rubber and resin materials include: rubber materials such as natural rubber (NR), styrene butadiene rubber (SBR), chloroprene rubber (CR), butadiene rubber (BR), acrylonitrile-butadiene rubber (NBR), silicone rubber (SR), ethylene-propylene rubber (EPT), ethylene-propylene-diene rubber (EPDM), fluoro rubber (FR), isobutyleneisoprene rubber (IIR), urethane rubber (UR), and chlorosulfonated polyethylene rubber (CSM); fluoro resin materials such as polytetrafluoroethylene (PTFE), tetrafluoroethylene/perfluoroalkyl vinyl ether copolymer (PFA), tetrafluoroethylene-ethylene copolymer (ETFE), chlorotrifluoroethylene-ethylene copolymer (ECTFE); and resin materials such as polyphenylene sulfide (PPS), polyethylene, polyimide, and polyacetal. Of these, ethylene-propylene-diene rubber (EPDM) and fluororubber (FR) are particularly preferable from the viewpoint of elastic modulus and alkali resistance.

### (Header)

The electrolyzer for alkaline water electrolysis preferably comprises a cathode compartment and an anode compartment for each electrolytic cell. In order to conduct the electrolysis reaction continuously in the electrolyzer, it is necessary to continuously supply an electrolyte that contains sufficient amounts of the raw materials to be consumed by electrolysis into the cathode compartment and the anode compartment of each electrolytic cell.

The electrolytic cell is connected to an electrolyte supply/discharge pipe, called a header, shared by a plurality of electrolytic cells. In general, the anode distribution pipe is called an anode inlet header, the cathode distribution pipe is a cathode inlet header, the anode collection pipe is an anode outlet header, and the cathode collection pipe is called a cathode outlet header. Each element is connected to the corresponding electrolyte distribution pipe and the corresponding electrolyte collection pipe through a hose or the like.

Although the material of the header is not particularly limited, it is necessary to adopt those that can withstand the positive properties of the electrolyte to be used, operating conditions such as pressure and temperature, and so on. The material of the header may be iron, nickel, cobalt, PTFE, ETFE, PFA, polyvinyl chloride, or polyethylene.

Internal header type refers to a type in which an electrolyzer for alkaline water electrolysis and a header (a pipe for distributing or collecting an electrolyte) are integrated.

An example of internal header type has an anode inlet header and a cathode inlet header that is provided in a part of a lower portion of the outer frame at the edge of a partition wall, and similarly, an anode outlet header and a cathode outlet header in a part of an upper portion of the outer frame at the edge of the partition wall. The outer frame and the anode compartment or the cathode compartment are connected to each other at an electrolyte inlet or an electrolyte outlet through which the electrolyte passes.

The external header type refers to a type in which an electrolyzer for alkaline water electrolysis and a header (a pipe through which an electrolyte is distributed or collected) are independent.

An electrolyzer for alkaline water electrolysis of external header type is independently provided in such a manner that an anode inlet header and a cathode inlet header run in parallel to the electrolyzer in a direction perpendicular to the current-conducting surface of the electrolyzer. The anode inlet header and the cathode inlet header are connected to respective elements by a hose.

It is noted that the electrolyzer for alkaline water electrolysis of inner header type or outer header type may contain a gas-liquid separation box for separating the gas generated by electrolysis from the electrolyte. The attachment position of the gas-liquid separation box is not particularly limited, yet it may be installed between the anode compartment and the anode outlet header, or between the cathode compartment and the cathode outlet header.

### (Electrolyte)

In the electrolyzer for alkaline water electrolysis of the present embodiment, a cathode compartment frame to which a cathode is attached and an anode compartment frame to which an anode is attached are arranged via a partition wall. That is, the anode compartment and the cathode compartment are partitioned by a partition wall. The electrolyte is supplied to the anode compartment and the cathode compartment.

As the electrolyte, those commonly used for water electrolysis can be used. Examples thereof include a potassium hydroxide aqueous solution and a sodium hydroxide aqueous solution. Further, the concentration of the electrolyte is preferably 1 N or more and 12 N or less, and more preferably 6 N or more and 10 N or less.

In the electrolyzer for alkaline water electrolysis of the present embodiment, a current is applied to the electrolyzer for alkaline water electrolysis which has anodes and cathodes such as described above and in which electrolyte is circulated, and in this manner, hydrogen is produced at the cathodes. At this time, for example, a variable power supply can be used as the power supply. A variable power supply is a power supply whose output fluctuates over seconds to minutes derived from a renewable energy power station, unlike a power supply with stable output, such as grid power. The method of renewable energy generation is not particularly limited, yet for example, it may be solar power generation or wind power generation.

For example, in the case of electrolysis using an electrolyzer for alkaline water electrolysis, a cationic electrolyte in the electrolyte moves from the anode compartment of an element through the diaphragm to the cathode compartment of the adjacent element, and an anionic electrolyte moves from the cathode compartment of an element through the diaphragm to the anode compartment of the adjacent element. In this way, the current during electrolysis will flow along the direction in which the elements are connected in series. That is, the current flows from the anode compartment of one element to the cathode compartment of the adjacent element via the diaphragm. Through the electrolysis, oxygen gas is generated in the anode compartment, and hydrogen gas in the cathode compartment.

The bipolar electrolytic cell 65 of the present embodiment can be used for the bipolar electrolyzer 50, an electrolysis device 70 for alkaline water electrolysis, or the like. Examples of the electrolysis device 70 for alkaline water electrolysis include a device comprising the bipolar electrolyzer 50 of the present embodiment, a tubing pump 71 to circulate the electrolyte, a gas-liquid separation tank 72 to separate the electrolyte from hydrogen and/or from oxygen, and a water replenisher to replenish water consumed by electrolysis.

The above electrolysis device 70 for alkaline water electrolysis may further comprise other components such as a rectifier 74, an oxygen concentration meter 75, a hydrogen concentration meter 76, a flow meter 77, a pressure gauge 78, a heat exchanger 79, and a pressure control valve 80.

In the alkaline water electrolysis method using the electrolysis device for alkaline water electrolysis, the current density applied to the electrolytic cell is preferably 1 kA/m² to 20 kA/m², and more preferably 6 kA/m² to 15 kA/m².

In particular, when the variable power supply is used, it is preferable that the upper limit of the current density is the aforementioned range.

In the bipolar electrolytic cell of the present embodiment, the accumulated discharge amount until the potential reaches +0.12 V (vs. RHE) until an oxidation current of 6 kA/m² is conducted for 1 hour and a reduction current of 15 A/m² is conducted to the anode for alkaline water electrolysis is greater than the accumulated discharge amount until the potential reaches +1.12 V (vs. RHE) until an oxidation current of 6 kA/m² is conducted for 1 hour and then a reduction current of 15 A/m² is conducted to the cathode for alkaline water electrolysis. This reduces the fluctuation of the potential induced by the reverse current on the anode so as to be smaller than the fluctuation of the potential induced by the reverse current on the cathode, which suppresses degradation of the anode due to reverse current and keeps the cell voltage to be further lower.

From the above viewpoint, it is preferable that the accumulated discharge amount until the potential reaches +1.12 V (vs. RHE) until a reduction current of 6 kA/m² is conducted for 1 hour and then an oxidation current of 15 A/m² is conducted to the anode is 10000 C/m² or more and 300000 C/m² or less.

### <Method of producing hydrogen>

A method of producing hydrogen of the present embodiment includes performing electrolysis of water containing alkali by an electrolyzer to produce hydrogen, and may be performed by using the electrolyzer for alkaline water electrolysis of the present embodiment.

Note that the details of the electrolyzer for alkaline water electrolysis of the present embodiment are as described above.

The method of producing hydrogen of the present embodiment may include producing hydrogen by electrolyzing water containing alkali relying on a variable power supply in which positive current conduction and interruption of the positive current conduction are repeated.

Although the cathode for generating hydrogen of the present disclosure, the bipolar electrolytic cell of the present disclosure, the electrolyzer for alkaline water electrolysis of the present disclosure, and the method of producing hydrogen of the present disclosure have been described with reference to the drawings, they are not limited to the examples above and the embodiment described above may be modified where appropriate.

### EXAMPLES

The following provides a description of the present disclosure through specific examples and comparative examples. However, the present disclosure is not limited to the following examples.

### (Example 1-1)

A bipolar element was fabricated according to the following steps and named Example 1-1.

### - Cathode 1 -

A plain weave mesh substrate of 40 mesh woven with nickel fine wire having a diameter of 0.15 mm was used as a conductive material. The conductive substrate was blasted with alumina powder having a weight-average particle diameter of 100 µm or less, cut into 8.5 cm × 17.0 cm, then acid treated in a 6-N hydrochloric acid at room temperature for 10 minutes, washed with water, and dried.

The dried conductive substrate was heated and sintered at 500 °C for 10 minutes using a muffle furnace to form a nickel oxide layer on the surface of the conductive substrate. Using an electronic balance PG 503-S manufactured by Mettler Toledo Corporation, the weight of the conductive substrate after heating and sintering was measured.
Next, a coating liquid 1 was prepared by mixing diamminedinitro Pt nitric acid solution (manufactured by Tanaka Kikinzoku Kogyo K. K., Pt concentration: 100 g/L), Nd nitrate hexahydrate (manufactured by Kanto Chemical Co., Inc., 3N5), and water so that the molar ratio of the Pt and Nd elements was 70:30.

### - Coating step -

The conductive substrate was sintered by heating and then was immersed in the coating liquid 1 in a bat. The substrate was removed from the bat and the excess coating liquid adhered to the mesh of the conductive substrate was blown away using an air blower (dipping method).

### - Precursor layer formation step -

The conductive substrate that underwent the coating step was dried at 60 °C for 10 minutes to form a precursor layer.

### - Sintering step -

The conductive substrate having the precursor layer formed thereon was sintered by heating at 500 °C for 10 minutes using a muffle furnace to thermally decompose the precursor layer.

This cycle of the dipping application step, precursor layer formation step, and sintering step was repeated 17 times. Furthermore, the substrate was post-sintered at 500 °C for 1 hour in the air atmosphere to produce a cathode 1.

The cathode 1 was weighed with an electronic balance, and the difference from the weight of the conductive substrate before the formation of the catalyst layer was divided by the area of 8.5 cm × 17.0 cm to calculate the weight of the catalyst layer per unit area.

The weight of Pt contained in the catalyst layer was then calculated assuming that the weight of the catalyst layer coincided with the total weight of PtO and Nd₂O₃ contained in the catalyst layer.

### - Anode 1 -

Ni expanded metal with an SW of 3.0 mm, an LW of 4.5 mm, a thickness of 0.75 mm, and an aperture ratio 54% was used as an anode 1.

### - Partition wall and outer frame -

An element including a partition wall partitioning an anode and a cathode and an outer frame bordering the partition wall was used as a bipolar element. Those members in contact with electrolyte such as the partition wall and the frame of the bipolar element were all made of nickel.

### - Conductive elastic body -

As the conductive elastic body, a woven metal fabric of nickel wires having a wire diameter of 0.15 mm was corrugated so as to have a corrugation height of 5 mm. The thickness was 5 mm, the repulsive force at 50 % compressive deformation was 150 g/cm², and the mesh opening was about 5 mesh.

### - Diaphragm -

Into a ball mill pot having a capacity of 1000 mL and containing 1 kg of SUS balls with a particle size of 0.5 mm, 135 g of zirconium oxide (trade name "EP Zirconium Oxide", manufactured by Daiichi Kigenso Kagaku Kogyo Co., Ltd.) and 210 g of N-methyl-2-pyrrolidone (manufactured by Wako Pure Chemical Industries, Ltd.) were placed. These materials were stirred together in a 25 °C atmosphere at a rotation speed of 70 rpm for 3 hours and dispersed to obtain a mixture. The resulting mixture was filtered through a stainless steel mesh (mesh count: 30 mesh) to separate the balls from the mixture. To the mixture from which the balls had been separated, 45 g of polysulfone (Udel^{®} (Udel is a registered trademark in Japan, other countries, or both) manufactured by Solvay Advanced Polymers) and 18 g of polyvinylpyrrolidone (manufactured by Wako Pure Chemical Industries, Ltd.; weight-average molecular weight (Mw): 900,000) were added, which was stirred therewith for 12 hours at 60 °C using a three-one motor to cause dissolution and obtain a coating liquid having the following composition.
Polysulfone: 15 parts by mass
Polyvinylpyrrolidone: 6 parts by mass
N-Methyl-2-pyrrolidone: 70 parts by mass
Zirconium oxide: 45 parts by mass

The coating liquid was applied to both surfaces of a polyphenylene sulfide mesh (manufactured by Clever Co., Ltd., film thickness: 280 µm, mesh opening: 358 µm, and fiber diameter: 150 µm) as a substrate using a comma coater to obtain a coating thickness of 150 µm per surface. Immediately after the coating, the substrate coated with the coating liquid was exposed to vapor from a coagulation bath holding a pure water/isopropanol mixture (manufactured by Wako Pure Chemical Industries, Ltd.; pure water/isopropanol = 50/50 (v/v)) at 30 °C for 2 minutes. Immediately thereafter, the substrate coated with the coating liquid was immersed in the coagulation bath for 4 minutes. A coating film was formed on the surface of the substrate through coagulation of polysulfone. Thereafter, the coating film was thoroughly rinsed with pure water to obtain a porous membrane.

The average pore diameter of this porous membrane was 0.3 µm in terms of average pore diameter for water permeation at 90 °C. The thickness was 580 µm. The aperture ratio was 43 %. The mode diameter of ZrO₂ was 5.0 µm. The ratio of the mode diameter of inorganic particles to the average pore size of the porous membrane (mode diameter/average pore diameter) was 2.6.

### - Gasket -

The gasket used had a quadrangular shape with a thickness of 4.0 mm, a width of 18 mm, and an inner size of 504 mm square, having an opening with the same size as the electrode compartment in plan view, and had a slit structure for holding by inserting the diaphragm therethrough. In the slit structure, a gap of 0.4 mm was provided at the center portion in the thickness direction of the inner wall of the opening to hold the partition wall by inserting the partition wall therethrough. This gasket was made of EPDM rubber and had a tensile stress of 4.0 MPa at 100 % deformation.

### - Zero-gap bipolar element -

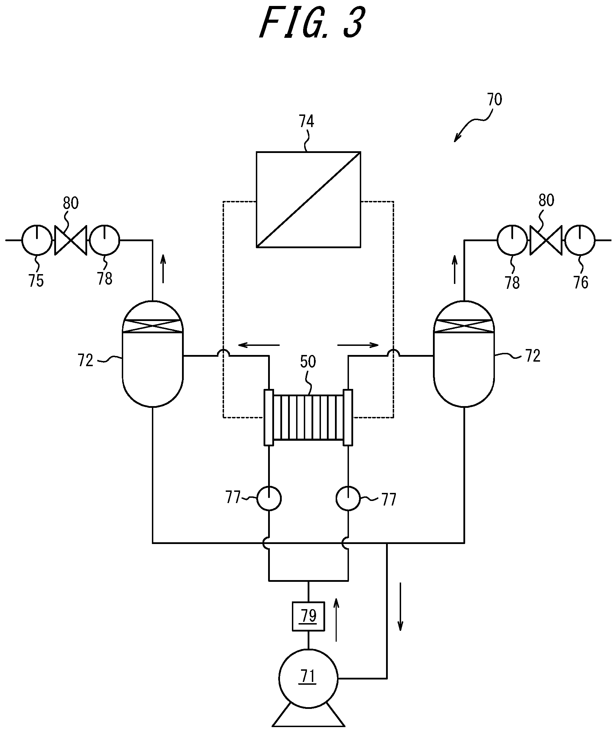

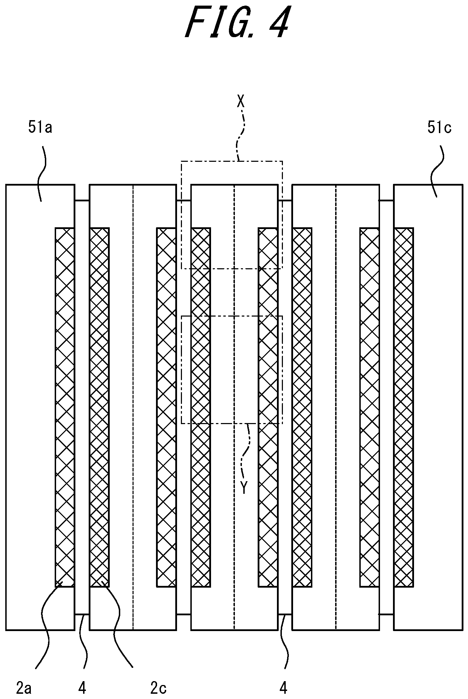

The zero-gap cell unit 60 of external header type had a rectangular shape of 540 mm × 620 mm, and the areas of the current-conducting surfaces of the anode 2a and the cathode 2c were 500 mm × 500 mm. On the cathode side, the zero-gap bipolar element 60 comprises: a cathode 2c, a conductive elastic body 2e, and a cathode current collector 2r that are stacked on top of one another and connected to a partition wall 1 via a cathode rib 6; and a cathode compartment 5c in which the electrolyte flows. On the anode side, the zero-gap bipolar element 60 comprises: an anode 2a that is connected to a partition wall 1 via an anode rib 6; and an anode compartment 5a in which the electrolyte flows (FIGS. 3 and 4).

The depth of the anode compartment 5a (the anode compartment depth, in FIG. 4, the distance between the partition wall and the anode) was 25 mm, the depth of the cathode compartment 5c (the cathode compartment depth, in FIG. 4, the distance between the partition wall and the cathode current collector) was 25 mm, and the material was nickel. The partition wall 1 was made of nickel and obtained by welding the anode rib 6 made of nickel having a height of 25 mm and a thickness of 1.5 mm and the cathode rib 6 made of nickel having a height of 25 mm and a thickness of 1.5 mm. The thickness of the partition wall 1 was 2 mm.

As the cathode current collector 2r, a nickel-expanded metal substrate subjected to blasting in advance was used. The thickness of the substrate was 1 mm and the aperture ratio was 54 %. The conductive elastic body 2e was fixed by spot-welding on the cathode current collector 2r.

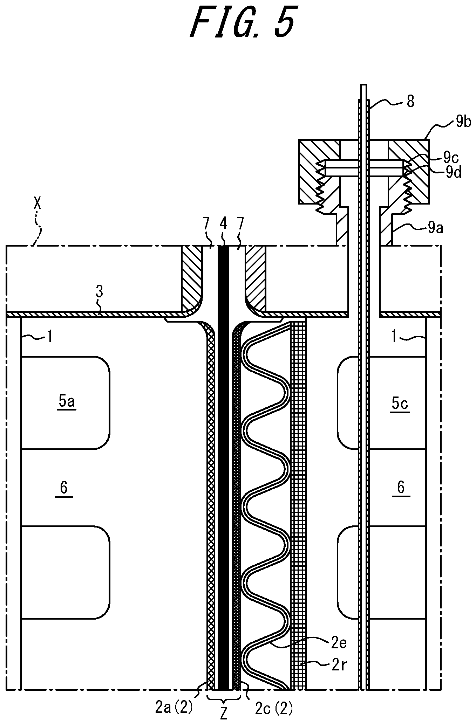

For the area X enclosed by the dashed-and-dotted line in FIG. 4, a nozzle 9a leading to the cathode compartment is provided on a side of the element, as illustrated in FIG. 5. A PFA resin-coated Pt wire 8 was inserted into an EPDM disk 9d and a PTFE disk 9c each having a hole in the center that matched the diameter of the PFA resin-coated Pt wire 8, which was inserted into the nozzle 9a and tightened with a cap nut 9b together with the EPDM disk d the PTFE disk 9c. In this way, the PFA resin-coated Pt wire can be introduced into the cell without causing leakage of the electrolyte to the outside. Note that the PFA coating of the PFA resin-coated Pt wire 8 on one end on the side outside the element was stripped by about 10 mm so that the stripped end could be pinched with an alligator clip.

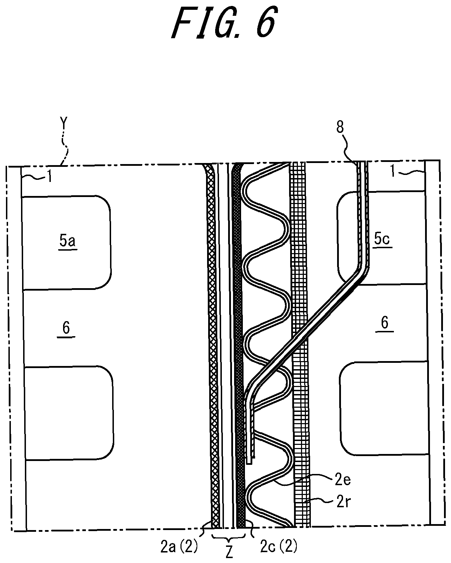

Furthermore, for the area Y enclosed by the dashed-and-double-dotted line in FIG. 4, as illustrated in FIG. 6, the PFA resin of the end of the PFA resin-coated Pt wire *a* led into the cathode compartment of the element was stripped off by about 0.5 mm, so that the Pt wire came into contact with the hydrogen bubbles produced by electrolysis. The PFA resin-coated Pt wire *a* was bent in the cathode compartment, made to pass through the through hole of the current collector 2r and the gap of the conductive elastic body 2e, and fixed to near the surface opposite to the diaphragm such that the tip of the Pt wire did not contact any of the cathode 2c (2), the conductive elastic body 2e, and the current collector 2r (FIG. 6). In this way, bubbles of hydrogen generated by electrolysis come into contact with the Pt wire, to thereby form the RHE reference electrode where the potential of the Pt wire is at the hydrogen generating potential.

By stacking these zero-gap bipolar elements on top of one another via the gasket holding the diaphragm, it is possible to form a zero-gap structure Z in which the anode 2a and the cathode 2c are pressed against the diaphragm 4.

### (Example 1-2)

A bipolar element was fabricated under the same conditions as in Example 1-1, except that a cathode 2 that was fabricated as described below was used, and was named Example 1-2.

### - Cathode 2 -

A plain weave mesh substrate of 40 mesh woven with nickel fine wire having a diameter of 0.15 mm was used as a conductive material. The conductive substrate was blasted with alumina powder having a weight-average particle diameter of 100 µm or less, cut into 8.5 cm × 17.0 cm, then acid treated in a 6-N hydrochloric acid at room temperature for 10 minutes, washed with water, and dried.

The dried conductive substrate was heated and sintered at 500 °C for 10 minutes using a muffle furnace to form a nickel oxide layer on the surface of the conductive substrate. Using an electronic balance PG 503-S manufactured by Mettler Toledo Corporation, the weight of the conductive substrate after heating and sintering was measured.

Next, a coating liquid 2 was prepared by mixing diamminedinitro Pt nitric acid solution (manufactured by Tanaka Kikinzoku Kogyo K. K., Pt concentration: 100 g/L), Nd nitrate hexahydrate (manufactured by Kanto Chemical Co., Inc., 3N5), and water so that the molar ratio of the Pt and Nd elements was 80:20.

A cathode 2 was fabricated under the same conditions as in Example 1-1, except that the cycle of the application step, precursor layer formation step, and sintering step was repeated 15 times using this coating liquid 2, and the weights of the catalyst and Pt were calculated.

### (Example 1-3)

A bipolar element was fabricated under the same conditions as in Example 1-1, except that a cathode 3 that was fabricated as described below was used, and was named Example 1-3.

### - Cathode 3 -

A plain weave mesh substrate of 40 mesh woven with nickel fine wire having a diameter of 0.15 mm was used as a conductive material. The conductive substrate was blasted with alumina powder having a weight-average particle diameter of 100 µm or less, cut into 8.5 cm × 17.0 cm, then acid treated in a 6-N hydrochloric acid at room temperature for 10 minutes, washed with water, and dried.

The dried conductive substrate was heated and sintered at 500 °C for 10 minutes using a muffle furnace to form a nickel oxide layer on the surface of the conductive substrate. Using an electronic balance PG 503-S manufactured by Mettler Toledo Corporation, the weight of the conductive substrate after heating and sintering was measured.

Next, a coating liquid 3 was prepared by mixing diamminedinitro Pt nitric acid solution (manufactured by Tanaka Kikinzoku Kogyo K. K., Pt concentration: 100 g/L), Nd nitrate hexahydrate (manufactured by Kanto Chemical Co., Inc., 3N5), and water so that the molar ratio of the Pt and Nd elements was 90:10.

A cathode 3 was fabricated under the same conditions as in Example 1-1, except that the cycle of the application step, precursor layer formation step, and sintering step was repeated 13 times using this coating liquid 3, and the weights of the catalyst and Pt were calculated.

### (Example 1-4)

A bipolar element was fabricated under the same conditions as in Example 1-1, except that a cathode 4 that was fabricated as described below was used, and was named Example 1-4.

### - Cathode 4 -

A plain weave mesh substrate of 40 mesh woven with nickel fine wire having a diameter of 0.15 mm was used as a conductive material. The conductive substrate was blasted with alumina powder having a weight-average particle diameter of 100 µm or less, cut into 8.5 cm × 17.0 cm, then acid treated in a 6-N hydrochloric acid at room temperature for 10 minutes, washed with water, and dried.

The dried conductive substrate was heated and sintered at 500 °C for 10 minutes using a muffle furnace to form a nickel oxide layer on the surface of the conductive substrate. Using an electronic balance PG 503-S manufactured by Mettler Toledo Corporation, the weight of the conductive substrate after heating and sintering was measured.

Next, a coating liquid 4 was prepared by mixing diamminedinitro Pt nitric acid solution (manufactured by Tanaka Kikinzoku Kogyo K. K., Pt concentration: 100 g/L), Ni(II) nitrate hexahydrate (manufactured by Kanto Chemical Co., Inc., 3N5), and water so that the molar ratio of the Pt and Ni elements was 75:25.

A first layer of the catalyst layer was formed on the conductive substrate by repeating the cycle of the application step and precursor layer formation step five times using this coating liquid 4. The resultant was weighed with an electronic balance, and the difference from the weight of the conductive substrate before the formation of the first layer was divided by the area of 8.5 cm × 17.0 cm to calculate the weight of the first layer per unit area.

The weight of Pt contained in the first layer was calculated assuming that the weight of the first layer coincided with the total weight of PtO and NiO contained in the first layer.

Next, a coating liquid 5 was prepared by mixing diamminedinitro Pt nitric acid solution (manufactured by Tanaka Kikinzoku Kogyo K. K., Pt concentration: 100 g/L), Nd nitrate hexahydrate (manufactured by Kanto Chemical Co., Inc., 3N5), and water so that the molar ratio of the Pt and Nd elements was 75:25.

Subsequently, a second layer of the catalyst layer was formed on the conductive substrate having the first layer formed thereon by repeating the cycle of the application step and precursor layer formation step 11 times using this coating liquid 5. Furthermore, the substrate was post-sintered at 500 °C for 1 hour in the air atmosphere to produce a cathode 4.

The cathode 4 was weighed with an electronic balance, and the difference from the weight of the conductive substrate before the formation of the second layer was divided by the area of 8.5 cm × 17.0 cm to calculate the weight of the second layer per unit area.

The weight of Pt contained in the second layer was calculated assuming that the weight of the second layer coincided with the total weight of PtO and Nd₂O₃ contained in the catalyst layer.

The weight of the catalyst layer was calculated by summing the weight of the first layer and the weight of the second layer, and the weight of Pt in the catalyst layer was calculated by summing the weight of Pt in the first layer and the weight of Pt in the second layer.

### (Example 1-5)

A bipolar element was fabricated under the same conditions as in Example 1-1, except that a cathode 5 that was fabricated as described below was used, and was named Example 1-5.

### - Cathode 5 -

A plain weave mesh substrate of 40 mesh woven with nickel fine wire having a diameter of 0.15 mm was used as a conductive material. The conductive substrate was blasted with alumina powder having a weight-average particle diameter of 100 µm or less, cut into 8.5 cm × 17.0 cm, then acid treated in a 6-N hydrochloric acid at room temperature for 10 minutes, washed with water, and dried.

The dried conductive substrate was heated and sintered at 500 °C for 10 minutes using a muffle furnace to form a nickel oxide layer on the surface of the conductive substrate. Using an electronic balance PG 503-S manufactured by Mettler Toledo Corporation, the weight of the conductive substrate after heating and sintering was measured.

Next, a coating liquid 6 was prepared by mixing diamminedinitro Pt nitric acid solution (manufactured by Tanaka Kikinzoku Kogyo K. K., Pt concentration: 100 g/L), Nd nitrate hexahydrate (manufactured by Kanto Chemical Co., Inc., 3N5), Ni(II) nitrate hexahydrate (manufactured by Kanto Chemical Co., Inc., 3N5), and water so that the molar ratio of the Pt element, Nd element, and Ni element was 75:17:8.

A cathode 5 was fabricated under the same conditions as in Example 1-1, except that the cycle of the application step, precursor layer formation step, and sintering step was repeated 17 times using this coating liquid 6. The resultant was weighed with an electronic balance, and the difference from the weight of the conductive substrate before the formation of the catalyst layer was divided by the area of 8.5 cm × 17.0 cm to calculate the weight of the catalyst layer per unit area.

The weight of the catalyst layer was then calculated assuming that it coincided with the total weight of PtO, Nd₂O₃, and NiO in the catalyst layer.

### (Example 1-6)

A bipolar element was fabricated under the same conditions as in Example 1-1, except that a cathode 6 that was fabricated as described below was used, and was named Example 1-6.

### - Cathode 6 -

Electrolytic Ni foil with a gauge thickness of 16 µm was used as the conductive substrate. One side of this Ni foil was roughened by electrolytic Ni plating. The arithmetic mean roughness Ra of the roughened surface was 0.9 µm.

The nickel foil was made into a porous foil by punching to form circular holes. The aperture ratio was 49 %. The conductive substrate was cut out into a piece of 8.5 cm × 17.0 cm, which was ultrasonically cleaned in isopropyl alcohol for 10 minutes at room temperature, and dried.

The dried conductive substrate was heated and sintered at 400 °C for 10 minutes using a muffle furnace to form a nickel oxide layer on the surface of the conductive substrate. Using an electronic balance PG 503-S manufactured by Mettler Toledo Corporation, the weight of the conductive substrate after heating and sintering was measured.

The coating liquid 5 was used in the application step. The coating liquid 5 was sprayed onto the roughened side surface of the conductive substrate using a spray with compressed air at 0.1 MPa as a carrier gas, and then the conductive substrate was dried at 60 °C for 10 minutes to form the precursor layer.

The conductive substrate having the precursor layer formed thereon was sintered by heating at 400 °C for 10 minutes using a muffle furnace to thermally decompose the precursor layer.

This cycle of the dipping application step, precursor layer formation step, and sintering step was repeated 17 times. Furthermore, the substrate was post-sintered at 400 °C for 1 hour in the air atmosphere to produce a cathode 6.

The cathode 6 was weighed with an electronic balance, and the difference from the weight of the conductive substrate before the formation of the catalyst layer was divided by the area of 8.5 cm × 17.0 cm to calculate the weight of the catalyst layer per unit area.

The weight of Pt contained in the catalyst layer was then calculated assuming that the weight of the catalyst layer coincided with the total weight of PtO and Nd₂O₃ contained in the catalyst layer.

### (Example 1-7)

A bipolar element was fabricated under the same conditions as in Example 1, except that a cathode 7 that was fabricated as described below was used, and was named Example 1-7.

### - Cathode 7 -

A cathode 7 was fabricated under the same conditions as in Example 1-1, except that the cycle of the application step, precursor layer formation step, and sintering step was repeated 10 times using the coating liquid 1, and the weights of the catalyst and Pt were calculated.

### (Example 1-8)

A bipolar element was fabricated under the same conditions as in Example 1-1, except that a cathode 8 that was fabricated as described below was used, and was named Example 1-8.

### - Cathode 8 -

A cathode 8 was fabricated under the same conditions as in Example 1-1, except that the cycle of the application step, precursor layer formation step, and sintering step was repeated 44 times using the coating liquid 1, and the weights of the catalyst and Pt were calculated.

### (Example 1-9)

A bipolar element was fabricated under the same conditions as in Example 1-1, except that a cathode 9 that was fabricated as described below was used, and was named Example 1-9.

### - Cathode 9 -

A cathode 9 was fabricated under the same conditions as in Example 1-1, except that the cycle of the application step, precursor layer formation step, and sintering step was repeated six times using the coating liquid 1, and the weights of the catalyst and Pt were calculated.

### (Example 1-10)

A bipolar element was fabricated under the same conditions as in Example 1-1, except that a cathode 10 that was fabricated as described below was used, and was named Example 1-10.

### - Cathode 10 -

A cathode 10 was fabricated under the same conditions as in Example 1-1, except that the cycle of the application step, precursor layer formation step, and sintering step was repeated 57 times using the coating liquid 1, and the weights of the catalyst and Pt were calculated.

### (Example 1-11)

A bipolar element was fabricated under the same conditions as in Example 1-1, except that a plain weave mesh of 40 mesh woven with nickel fine wire having a diameter of 0.15 mm was used as an anode 2, this anode 2 was used, and a zero-gap bipolar element having the same conductive elastic body, current collector, and rib on the anode side as those in the cathode side was used, and was named Example 1-11.

### (Example 1-12)

A bipolar element was fabricated under the same conditions as in Example 1-1, except that an anode 3 made of blasted Ni expanded metal with an SW of 3.0 mm, an LW of 4.5 mm, a thickness of 0.75 mm, and an aperture ratio 54%, and was named Example 1-12.

### (Comparative Example 1-1)

A bipolar element was fabricated under the same conditions as in Example 1-1, except that a cathode 101 that was fabricated as described below was used, and was named Comparative Example 1-1.

### - Cathode 101 -

A coating liquid 7 was prepared by mixing diamminedinitro Pt nitric acid solution (manufactured by Tanaka Kikinzoku Kogyo K. K., Pt concentration: 100 g/L) and water.

A cathode 101 was fabricated under the same conditions as in Example 1-1, except that the cycle of the application step, precursor layer formation step, and sintering step was repeated 12 times using this coating liquid 7. The weight of Pt contained in the catalyst layer was then calculated assuming that the weight of the catalyst layer was the weight of PtO contained in the catalyst layer.

### (Comparative Example 1-2)

A bipolar element was fabricated under the same conditions as in Comparative Example 1-1, except that a cathode 102 that was fabricated as described below was used, and was named Comparative Example 1-2.

### - Cathode 102 -

A cathode 102 was fabricated under the same conditions as in Comparative Example 1-1, except that the cycle of the application step, precursor layer formation step, and sintering step was repeated 20 times using the coating liquid 7. The weight of the catalyst layer and the weight of Pt contained in the catalyst layer were calculated in the same manner as in Comparative Example 1-1.

### (Comparative Example 1-3)

A bipolar element was fabricated under the same conditions as in Example 1-1, except that a cathode 103 that was fabricated as described below was used, and was named Comparative Example 1-3.

### - Cathode 103 -

A coating liquid 8 was prepared by mixing diamminedinitro Pt nitric acid solution (manufactured by Tanaka Kikinzoku Kogyo K. K., Pt concentration: 100 g/L), Ce(III) nitrate hexahydrate (manufactured by Kanto Chemical Co., Inc., Deer special grade), and water so that the molar ratio of the Pt and Ce elements was 50:50.

A cathode 103 was fabricated under the same conditions as in Example 1-1, except that the cycle of the application step, precursor layer formation step, and sintering step was repeated 13 times using this coating liquid 8. The weight of Pt contained in the catalyst layer was then calculated assuming that the weight of the catalyst layer coincided with the total weight of PtO and CeO₂ contained in the catalyst layer.

### (Comparative Example 1-4)

A bipolar element was fabricated under the same conditions as in Example 1-1, except that a cathode 104 that was fabricated as described below was used, and was named Comparative Example 1-4.

### - Cathode 104 -

A cathode 104 was fabricated under the same conditions as in Example 1-1, except that the cycle of the application step, precursor layer formation step, and sintering step was repeated six times using the coating liquid 8. The weight of Pt contained in the catalyst layer was then calculated assuming that the weight of the catalyst layer coincided with the total weight of PtO and CeO₂ contained in the catalyst layer.

### (Comparative Example 1-5)

A bipolar element was fabricated under the same conditions as in Example 1-1, except that a cathode 105 that was fabricated as described below was used, and was named Comparative Example 1-5.

### - Cathode 105 -

A coating liquid 9 was prepared by mixing diamminedinitro Pt nitric acid solution (manufactured by Tanaka Kikinzoku Kogyo K. K., Pt concentration: 100 g/L), Ce(III) nitrate hexahydrate (manufactured by Kanto Chemical Co., Inc., Deer special grade), and water so that the molar ratio of the Pt and Ce elements is 64:36.

A cathode 105 was fabricated under the same conditions as in Example 1-1, except that the cycle of the application step, precursor layer formation step, and sintering step was repeated 15 times using this coating liquid 9. The weight of Pt contained in the catalyst layer was then calculated assuming that the weight of the catalyst layer coincided with the total weight of PtO and CeO₂ contained in the catalyst layer.

The following tests (1) to (4) were conducted on each example and each comparative example. Results are summarized in Table 1. Test (1) Method of measuring discharge amount of cathode

The three-electrode method was used to determine the discharge amount of the cathode as follows.

The measurement apparatus used was a potentiogalvanostat PARSTAT MC 1000 manufactured by Princeton Applied Research.

The same cathode used in each example and each comparative example was cut out into a piece of 18 mm × 17 mm and secured to a PTFE-coated nickel rod with nickel screws. A Pt mesh was used as the counter electrode and a silver-silver chloride (Ag/AgCl) glass electrode was used as the reference electrode. A 34-wt% potassium hydroxide solution was used as the electrolyte. The temperature was adjusted so that the temperature of the electrolyte was 70 °C. First, a reduction current with a current density of -6 kA/m² was conducted for 1 hour, and then an oxidation current with +15 A/m² was immediately conducted, without performing any open circuit voltage measurements between these. At this time, the potential of the cathode gradually increased from the hydrogen generating potential to a noble potential. The conduction of the current was stopped when the cathode potential reached +1.12 V (vs. RHE). Then, the discharge amount of the cathode (unit: C/m²) was calculated by determining the product of the time from the start of conduction with +15 A/m² to the stop of conduction and the absolute value of the conducted current density, 15A/m².

### Test (2) Method of measuring electric double layer capacitance of cathode

The three-electrode method was used to determine the electric double layer capacitance of the cathode as follows.

The measurement apparatus used was a potentiogalvanostat PARSTAT MC 1000 manufactured by Princeton Applied Research.

The same cathode used in each example and each comparative example was cut out into a piece of 18 mm × 17 mm and secured to a PTFE-coated nickel rod with nickel screws. A Pt mesh was used as the counter electrode and a silver-silver chloride (Ag/AgCl) glass electrode was used as the reference electrode. A 34-wt% potassium hydroxide solution was used as the electrolyte. The temperature was adjusted so that the temperature of the electrolyte was 70 °C. First, a reduction current with a current density of -6 kA/m² was conducted for 1 hour. Cyclic voltammetry with a potential sweep width of 0.40 V to 0.54 V (vs. RHE) was then performed at sweep rates of 50, 100, 200, and 400 mV/sec, and each sweep rate was repeated for 5 cycles. The average values of the oxidation and reduction currents at the time when the cathode potential at the fifth cycle of each sweep rate was 0.47 V (vs. RHE) were plotted on the vertical axis and the sweep rate on the horizontal axis, and the electric double layer capacitance (unit: C/cm²) was calculated from the slope of this plot.

### Test (3) Method of measuring discharge amount of anode

The three-electrode method was used to determine the discharge amount of the anode as follows.

The measurement apparatus used was a potentiogalvanostat PARSTAT MC 1000 manufactured by Princeton Applied Research.

The same anode used in each example and each comparative example was cut out into a piece of 18 mm × 17 mm and secured to a PTFE-coated nickel rod with nickel screws. A Pt mesh was used as the counter electrode and a silver-silver chloride (Ag/AgCl) glass electrode was used as the reference electrode. A 34-wt% potassium hydroxide solution was used as the electrolyte. The temperature was adjusted so that the temperature of the electrolyte was 70 °C. First, an oxidation current with a current density of +6 kA/m² was conducted for 1 hour, and then a reduction current with -15 A/m² was immediately conducted, without performing any open circuit voltage measurements between these. At this time, the potential of the anode gradually decreased from the oxygen generating potential to a lower potential. The conduction of the current was stopped when the anode potential reached +0.12 V (vs. RHE). Then, the discharge amount of the anode (unit: C/m²) was calculated by determining the product of the time from the start of conduction with -15 A/m² to the stop of conduction and the absolute value of the conducted current density, 15 A/m².

### Test (4) Current conduction interruption cycle test 1 of bipolar electrolyzer

In each of the examples and comparative examples, a bipolar electrolyzer stacked in the order illustrated in FIG. 4 was fabricated as follows. An anode terminal cell unit 51a having the anode described in the respective examples and comparative examples, the diaphragm described above, three sets of zero-gap bipolar elements in the respective examples and comparative examples stacked having the above-described diaphragm interposed therebetween, the diaphragm described above, and a cathode terminal cell 51c having the cathode described in the respective examples and comparative examples were stacked to form a bipolar electrolyzer.

Next, an electrolysis device illustrated in FIG. 3 was fabricated using this bipolar electrolyzer.

The electrolysis device comprises a bipolar electrolyzer 50, a tubing pump 71 for circulating the electrolyte, and gas-liquid separation tanks 72 for separating the electrolyte from hydrogen and/or oxygen. A 30 % KOH aqueous solution is sealed as the electrolyte in each gas-liquid separation tank 72 and in the bipolar electrolyzer 50. The electrolyte is caused by the tubing pump 71 to circulate through the anode compartments 5a of the bipolar electrolyzer 50 and the gas-liquid separation tank 72 for the anode, and through the cathode compartments 5c of the bipolar electrolyzer 50 and the gas-liquid separation tank 72 for cathode. The temperature was adjusted to 90 °C.

In the above electrolysis device, the gas separated in each gas-liquid separation tank 72 is recovered through a pressure gauge 78, a pressure control valve 80, an oxygen concentration meter 75, or a hydrogen concentration meter 76. In addition, electric power can be controlled by the rectifier 74. In addition, flow meters 77 and a heat exchanger 79 are provided in the passage of the circulating electrolyte. Arrows in FIG. 3 indicate the directions in which the circulating liquid (electrolyte) and the gas flow.

The circulation circuit used SGP carbon steel pipes provided with Teflon^{®} (Teflon is a registered trademark in Japan, other countries, or both) lining on the surface inside the portion to be brought in contact with electrolytic solution, and 20A pipes was used. The gas-liquid separation tank 72 used had a height of 1,400 mm and a volume of 1 m³.

The gas-liquid separation tank 72 used had a height of 1,400 mm and a volume of 1 m³.

The amount of liquid in each gas-liquid separation tank 72 was about 50 % of the design volume.

In the electrolyzer of external header type, external pipes (each including an anode inlet header 10ai, a cathode inlet header 10ci, an anode outlet header 10ao, and a cathode outlet header lOco) for flowing an electrolyte are provided at four locations in an electrolytic frame, which is the casing of a bipolar element. Each of these external pipes is connected via an external hose to each electrode compartment of the electrolyzer.

These piping structures are called external header structures. The external header pipes are divided into cathode-side external header pipes and anode-side external header pipes.

As such, in each element, the electrolyte enters the cathode compartment 5c from the cathode inlet header 10ci via the external hose, and the electrolyte flows from the cathode compartment 5c to the cathode outlet header lOco via the external hose. Similarly, on the anode side, the electrolyte enters the anode compartment 5a from the anode inlet header 10ai via the external hose, and the electrolyte flows from the anode compartment 5a to the anode outlet header 10ao via the external hose. Since the input header of the external header is on the lower side of the electrolytic frame and the output header on the upper side, the electrolyte flows from the bottom to the top. Further, it rises in a substantially vertical direction with respect to the electrode surface. A thermocouple is installed in each external hose of each cell, and the temperature difference before and after passing through the element can be measured.

In this example, since the anode compartment 5a and the cathode compartment 5c each have 29 compartments, the electrolyte is caused to flow from the inlet header toward the outlet header in each of the 29 compartments.

Since electrolysis produces hydrogen gas in the cathode compartment 5c and oxygen gas in the anode compartment 5a, there are formed a mixed-phase flow of the electrolyte and the hydrogen gas in the cathode outlet header lOco and a mixed-phase flow of the electrolyte and the oxygen gas in the anode outlet header 10ao.

From the rectifier 74, the bipolar electrolyzer 50 was energized with respect to the area of the cathode and the anode under the conditions of Electrolysis tests 1 or Electrolysis tests 2 described below. The pressure in the tank after the start of current conduction was measured with each pressure gauge 78 and adjusted so that the cathode-side pressure was 50 kPa and the oxygen-side pressure was 49 kPa. The pressure adjustment was carried out by installing a control valve 80 downstream of each pressure gauge 78.

In the above electrolysis device, the gas separated in each gas-liquid separation tank 72 is recovered through a pressure gauge 78, a pressure control valve 80, an oxygen concentration meter 75, or a hydrogen concentration meter 76. In addition, electric power can be controlled by the rectifier 74. In addition, flow meters 77 and a heat exchanger 79 are provided in the passage of the circulating electrolyte.

Note that the rectifier, the oxygen concentration meter, the hydrogen concentration meter, the pressure gauges, the tubing pump, the gas-liquid separation tanks, the water replenisher, and the like were all those commonly used in the technical field, and the electrolysis device for alkaline water electrolysis was prepared using these components.

During hydrogen generating electrolysis using the above electrolysis device, the potential of the zero-gap bipolar element was equal to that of the cathode, and the PTFE-coated Pt wire fixed near the cathode in the cathode compartment of the zero-gap bipolar element served as the RHE electrode because it came in contact with the hydrogen generated by the electrolysis and was at the hydrogen generation potential. Hence, the potential difference between the PTFE-coated Pt wire and the zero-gap bipolar element was measured, and this potential difference was determined as the cathode overvoltage.

Using the above electrolysis device, water electrolysis was performed by continuously conducting positive current for 100 hours so that the current density was 6 kA/m², and the electrolysis was then stopped for 5 minutes. Thereafter, a positive current of 6 kA/m² was again conducted for 5 minutes and stopped for 5 minutes. In total, 1500 current conduction interruption cycles were performed, each cycle composed of one positive current conduction for 5 minutes and one interruption for 5 minutes. The average of the cell voltages of the two cells other than the anode terminal cell unit 51a and the cathode terminal cell 51c in the first positive current conduction for 5 minutes after 100 hours of positive current conduction was identified as the initial cell voltage, the average of the cathode overvoltages of the above-described two cells at this time was identified as the initial overvoltage, and the average of the cathode overvoltages of the above-described two cells in the positive current conduction in the 1500^{th} current conduction interruption cycle was identified as the overvoltage after the test.

**[Table 1]**

| | | Cathode | | | | | | | | | | Anode | | (4) Current conduction interruption cvclc test | | |
|---|---|---|---|---|---|---|---|---|---|---|---|---|---|---|---|---|
| | | Substrate | Pt | Lanthanoid | | Catalyst layer structure | Catalyst weight | Pt weight | (1) Amount of discharge | (2) Electric double layer capacitance | | Type | (3) Amount of discharge | Initial overvoltage | Initial cell voltage | Overvoltage after test |
| | | | Molar ratio | Molar ratio | Element | | [g/m²] | [g/m²] | [C/m²] | [F/m²] | | | [C/m²] | [mV] | [V] | [mV] |
| Example 1-1 | Cathode 1 | Ni mesh | 70 | 30 | Nd | Pt70Nd30 | 8.0 | 5.5 | 3250 | 0.044 | Anode 1 | Ni expanded metal | 670 | 107 | 2.038 | 102 |
| Example 1-2 | Cathode 2 | Ni mesh | 80 | 20 | Nd | Pt80Nd20 | 7.7 | 5.9 | 2480 | 0.033 | Anode 1 | Ni expanded metal | 670 | 108 | 2.048 | 105 |
| Example 1-3 | Cathode 3 | Ni mesh | 90 | 10 | Nd | PI90Nd10 | 6.7 | 5.7 | 1680 | 0.027 | Anode 1 | Ni expanded metal | 670 | 100 | 2.059 | 101 |
| Example 1-4 | Cathode 4 | Ni mesh | 82 | 18 | Nd | Pt75Nd25/Pt75Ni25 | 8.0 | 6.0 | 2810 | 0.041 | Anode 1 | Ni expanded metal | 670 | 105 | 2.056 | 105 |
| Example 1-5 | Cathode 5 | Ni mesh | 82 | is | Nd | Pt75Nd17Ni8 | 7.8 | 3.5 | 2780 | 0.039 | Anode 1 | Ni expanded metal | 670 | 103 | 2.076 | 108 |
| Example 1-6 | Cathode 6 | Electrolytic Ni foil (Ra 0.9 µm) | 75 | 25 | Nd | Pt75Nd25 | 8.1 | 5.9 | 4900 | 0.070 | Anode 1 | Ni expanded metal | 670 | 98 | 2003 | 101 |
| Example 1-7 | Cathode 7 | Ni mesh | 70 | 30 | Nd | Pt70Nd30 | 5.3 | 3.7 | 2150 | 0.029 | Anode 1 | Ni expanded metal | 670 | 104 | 2.038 | 100 |
| Example 1-8 | Cathode 8 | Ni mesh | 70 | 30 | Nd | Pt70Nd30 | 19.9 | 13.7 | 8000 | 0.115 | Anode 1 | Ni expanded metal | 670 | 111 | 2.017 | 120 |
| Example 1-9 | Cathode 9 | Ni mesh | 70 | 30 | Nd | Pt70Nd30 | 2.8 | 1.9 | 1120 | 0.015 | Anode 1 | Ni expanded metal | 670 | 101 | 2.072 | 122 |
| Example 1-10 | Cathode 10 | Ni mesh | 70 | 30 | Nd | Pt70Nd30 | 24.5 | 16.9 | 9650 | 0.140 | Anode 1 | Ni expanded metal | 670 | 119 | 2.035 | 130 |
| Example 1-11 | Cathode 1 | Ni mesh | 70 | 30 | Nd | Pt70Nd30 | 8.0 | 5.5 | 3250 | 0.044 | Anode 2 | Ni mesh | 850 | 108 | 2.015 | 112 |
| Example 1-12 | Cathode 1 | Ni mesh | 70 | 30 | Nd | Pt70Nd30 | 8.0 | 5.5 | 3250 | 0.044 | Anode 3 | Blasted Ni expanded metal | 1810 | 103 | 2.034 | 131 |
| Comp. Ex. 1-1 | Cathode 101 | Ni mesh | 100 | 0 | | Pt | 5.8 | 5.4 | 660 | 0.018 | Anode 1 | Ni expanded metal | 670 | 107 | 2.083 | 210 |
| Comp. Ex. 1-2 | Cathode 102 | Ni mesh | 100 | 0 | | Pt | 10.6 | 9.8 | 1220 | 0.025 | Anode 1 | Ni expanded metal | 670 | 104 | 2.036 | 287 |
| Comp. Ex. 1-3 | Cathode 103 | Ni mesh | 50 | 50 | Cc | Pt50Cc50 | 6.7 | 3.4 | 4650 | 0.086 | Anode 1 | Ni expanded metal | 670 | 104 | 2.028 | 186 |
| Comp. Ex. 1-4 | Cathode 104 | Ni mesh | 50 | 50 | Cc | Pt50Cc50 | 3.9 | 2.0 | 1930 | 0.035 | Anode 1 | Ni expanded metal | 670 | 105 | 2.012 | 207 |
| Comp. Ex. 1-5 | Cathode 105 | Ni mesh | 64 | 36 | Cc | Pt64Cc36 | 7.6 | 4.8 | 3280 | 0.082 | Anode 1 | Ni expanded metal | 670 | 103 | 2.033 | 164 |

In Test (4), the cathode overvoltage in Comparative Examples 1-1 to 1-5 all increased by 60 mV or more after the test, whereas an increase in the overvoltage in Examples 1-1 to 1-12 was suppressed to 30 mV or less, indicating significantly higher durability against 1500 interruptions of current conduction.

In addition, Examples 1-7 and 1-9 demonstrated higher durability than Comparative Example 1-1 even though the catalyst weight and Pt weight were lower than those in Comparative Example 1-1, and Examples 1-1 to Examples 1-7, 1-9, 1-11, and 1-12 demonstrated higher durability than Comparative Example 1-2 even though the catalyst weight and Pt weight were lower than those in Comparative Example 1-2.

The results indicate that a cathode with a catalyst layer containing Pt element and a lanthanoid element that becomes electrochemically stable as trivalent ions within the potential window of water of pH 7 or higher and pH 16 or lower in the molar ratio specified by the present disclosure had high durability.

In addition, the overvoltage after the test decreased by 4 mV in Example 1-7, whereas the overvoltage after the test increased by 21 mV in Example 1-9. It is considered that the durability reduces if the weight of the catalyst layer is too low. In addition, it is considered that if the discharge amount is too small, the potential of the cathode becomes too noble when the current is stopped, causing stronger degradation. The results indicated that the weight of the catalyst layer is preferably 4.5 g/m² or more, the Pt weight is preferably 3.5 g/m² or more, and the discharge amount is preferably 1500 C/m².

Furthermore, the initial overvoltage was 111 mV and the overvoltage after the test was 120 mV in Example 1-8, while the initial overvoltage was 119 mV and the overvoltage after the test was 130 mV in Example 1-10. Although both of the examples had high durability, overvoltages remained higher than those in the other examples. This is considered to be because of the fact that the oxide or hydroxide of the lanthanoid element present in the catalyst layer is an insulator or conductor with higher electrical resistance than metals, and if the weight of the catalyst is too high, the electrical resistance increases.

The results indicated that the weight of the catalyst layer is preferably 20 g/m² or less and the weight of Pt is preferably 15 g/m² or less.

Still furthermore, it was discovered that there was a positive correlation between the discharge amount of the cathode and the electric double layer capacitance, and that the electric double layer capacitance is preferably 0.01 F/cm² to 0.15 F/cm².

Next, Examples 2-1 to 2-21 and Comparative Examples 2-1 to 2-6 are described.

### (Example 2-1)

As in Example 1-1, the cathode 1 and the anode 1 were used.

### (Example 2-2)

As in Example 1-2, the cathode 2 and the anode 1 were used.

### (Example 2-3)

As in Example 1-3, the cathode 3 and the anode 1 were used.

### (Example 2-4)

As in Example 1-4, the cathode 4 and the anode 1 were used.

### (Example 2-5)

As in Example 1-5, the cathode 5 and the anode 1 were used.

### (Example 2-6)

As in Example 1-6, the cathode 6 and the anode 1 were used.

### (Example 2-7)

As in Example 1-7, the cathode 7 and the anode 1 were used.

### (Example 2-8)

As in Example 1-8, the cathode 8 and the anode 1 were used.

### (Example 2-9)

As in Example 1-9, the cathode 9 and the anode 1 were used.

### (Example 2-10)

As in Example 1-10, the cathode 10 and the anode 1 were used.

### (Example 2-11)

As in Example 1-11, the cathode 1 and the anode 2 were used.

### (Example 2-12)

As in Example 1-12, the cathode 1 and the anode 3 were used.

### (Example 2-13)

A cathode 11 that was fabricated as follows and the anode 1 were used.

### - Cathode 11 -

A plain weave mesh substrate of 40 mesh woven with nickel fine wire having a diameter of 0.15 mm was used as a conductive material. The conductive substrate was blasted with alumina powder having a weight-average particle diameter of 100 µm or less, cut into 8.5 cm × 17.0 cm, then acid treated in a 6-N hydrochloric acid at room temperature for 10 minutes, washed with water, and dried.

The dried conductive substrate was heated and sintered at 500 °C for 10 minutes using a muffle furnace to form a nickel oxide layer on the surface of the conductive substrate. Using an electronic balance PG 503-S manufactured by Mettler Toledo Corporation, the weight of the conductive substrate after heating and sintering was measured.

Next, a coating liquid 10 was prepared by mixing diamminedinitro Pt nitric acid solution (manufactured by Tanaka Kikinzoku Kogyo K. K., Pt concentration: 100 g/L), Nd nitrate hexahydrate (manufactured by Kanto Chemical Co., Inc., 3N5), and water so that the molar ratio of the Pt and Nd elements was 65:35.

A cathode 11 was fabricated under the same conditions as in Example 1-1, except that the cycle of the application step, precursor layer formation step, and sintering step was repeated 19 times using this coating liquid 10, and the weights of the catalyst and Pt were calculated.

### (Example 2-14)

A cathode 12 that was fabricated as follows and the anode 1 were used.

### - Cathode 12 -

A plain weave mesh substrate of 40 mesh woven with nickel fine wire having a diameter of 0.15 mm was used as a conductive material. The conductive substrate was blasted with alumina powder having a weight-average particle diameter of 100 µm or less, cut into 8.5 cm × 17.0 cm, then acid treated in a 6-N hydrochloric acid at room temperature for 10 minutes, washed with water, and dried.

The dried conductive substrate was heated and sintered at 500 °C for 10 minutes using a muffle furnace to form a nickel oxide layer on the surface of the conductive substrate. Using an electronic balance PG 503-S manufactured by Mettler Toledo Corporation, the weight of the conductive substrate after heating and sintering was measured.

Next, a coating liquid 11 was prepared by mixing diamminedinitro Pt nitric acid solution (manufactured by Tanaka Kikinzoku Kogyo K. K., Pt concentration: 100 g/L), Nd nitrate hexahydrate (manufactured by Kanto Chemical Co., Inc., 3N5), and water so that the molar ratio of the Pt and Nd elements was 95:5.

A cathode 12 was fabricated under the same conditions as in Example 1-1, except that the cycle of the application step, precursor layer formation step, and sintering step was repeated 17 times using this coating liquid 11, and the weights of the catalyst and Pt were calculated.

### (Example 2-15)

A cathode 13 that was fabricated as follows and the anode 1 were used.

### - Cathode 13 -

A plain weave mesh substrate of 40 mesh woven with nickel fine wire having a diameter of 0.15 mm was used as a conductive material. The conductive substrate was blasted with alumina powder having a weight-average particle diameter of 100 µm or less, cut into 8.5 cm × 17.0 cm, then acid treated in a 6-N hydrochloric acid at room temperature for 10 minutes, washed with water, and dried.

The dried conductive substrate was heated and sintered at 500 °C for 10 minutes using a muffle furnace to form a nickel oxide layer on the surface of the conductive substrate. Using an electronic balance PG 503-S manufactured by Mettler Toledo Corporation, the weight of the conductive substrate after heating and sintering was measured.

Next, a coating liquid 11 was prepared by mixing diamminedinitro Pt nitric acid solution (manufactured by Tanaka Kikinzoku Kogyo K. K., Pt concentration: 100 g/L), Sm nitrate hexahydrate (manufactured by Kanto Chemical Co., Inc., 3N5), and water so that the molar ratio of the Pt and Sm elements was 75:25.

A cathode 13 was fabricated under the same conditions as in Example 1-1, except that the cycle of the application step, precursor layer formation step, and sintering step was repeated 17 times using this coating liquid 11. The weight of Pt contained in the catalyst layer was then calculated assuming that the weight of the catalyst layer coincided with the total weight of PtO and Sm₂O₃ contained in the catalyst layer.

### (Example 2-16)

A cathode 14 that was fabricated as follows and the anode 1 were used.

### - Cathode 14 -

A plain weave mesh substrate of 40 mesh woven with nickel fine wire having a diameter of 0.15 mm was used as a conductive material. The conductive substrate was blasted with alumina powder having a weight-average particle diameter of 100 µm or less, cut into 8.5 cm × 17.0 cm, then acid treated in a 6-N hydrochloric acid at room temperature for 10 minutes, washed with water, and dried.

The dried conductive substrate was heated and sintered at 500 °C for 10 minutes using a muffle furnace to form a nickel oxide layer on the surface of the conductive substrate. Using an electronic balance PG 503-S manufactured by Mettler Toledo Corporation, the weight of the conductive substrate after heating and sintering was measured.

Next, a coating liquid 12 was prepared by mixing diamminedinitro Pt nitric acid solution (manufactured by Tanaka Kikinzoku Kogyo K. K., Pt concentration: 100 g/L), Gd nitrate hexahydrate (manufactured by Kanto Chemical Co., Inc., 3N5), and water so that the molar ratio of the Pt and Gd elements was 75:25.

A cathode 14 was fabricated under the same conditions as in Example 1-1, except that the cycle of the application step, precursor layer formation step, and sintering step was repeated 17 times using this coating liquid 12. The weight of Pt contained in the catalyst layer was then calculated assuming that the weight of the catalyst layer coincided with the total weight of PtO and Gd₂O₃ contained in the catalyst layer.

### (Example 2-17)

A cathode 15 that was fabricated as follows and the anode 1 were used.

### - Cathode 15 -

A plain weave mesh substrate of 40 mesh woven with nickel fine wire having a diameter of 0.15 mm was used as a conductive material. The conductive substrate was blasted with alumina powder having a weight-average particle diameter of 100 µm or less, cut into 8.5 cm × 17.0 cm, then acid treated in a 6-N hydrochloric acid at room temperature for 10 minutes, washed with water, and dried.

The dried conductive substrate was heated and sintered at 500 °C for 10 minutes using a muffle furnace to form a nickel oxide layer on the surface of the conductive substrate. Using an electronic balance PG 503-S manufactured by Mettler Toledo Corporation, the weight of the conductive substrate after heating and sintering was measured.

Next, a coating liquid 13 was prepared by mixing diamminedinitro Pt nitric acid solution (manufactured by Tanaka Kikinzoku Kogyo K. K., Pt concentration: 100 g/L), Tb nitrate hexahydrate (manufactured by Kanto Chemical Co., Inc., 3N5), and water so that the molar ratio of the Pt and Tb elements was 75:25.

A cathode 15 was fabricated under the same conditions as in Example 1-1, except that the cycle of the application step, precursor layer formation step, and sintering step was repeated 17 times using this coating liquid 13. The weight of Pt contained in the catalyst layer was then calculated assuming that the weight of the catalyst layer coincided with the total weight of PtO and Tb₂O₃ contained in the catalyst layer.

### (Example 2-18)

A cathode 16 that was fabricated as follows and the anode 1 were used.

### - Cathode 16 -

A plain weave mesh substrate of 40 mesh woven with nickel fine wire having a diameter of 0.15 mm was used as a conductive material. The conductive substrate was blasted with alumina powder having a weight-average particle diameter of 100 µm or less, cut into 8.5 cm × 17.0 cm, then acid treated in a 6-N hydrochloric acid at room temperature for 10 minutes, washed with water, and dried.

The dried conductive substrate was heated and sintered at 500 °C for 10 minutes using a muffle furnace to form a nickel oxide layer on the surface of the conductive substrate. Using an electronic balance PG 503-S manufactured by Mettler Toledo Corporation, the weight of the conductive substrate after heating and sintering was measured.

Next, a coating liquid 14 was prepared by mixing diamminedinitro Pt nitric acid solution (manufactured by Tanaka Kikinzoku Kogyo K. K., Pt concentration: 100 g/L), Dy nitrate pentahydrate (manufactured by Kanto Chemical Co., Inc., 3N5), and water so that the molar ratio of the Pt and Dy elements was 75:25.

A cathode 16 was fabricated under the same conditions as in Example 1-1, except that the cycle of the application step, precursor layer formation step, and sintering step was repeated 17 times using this coating liquid 14. The weight of Pt contained in the catalyst layer was then calculated assuming that the weight of the catalyst layer coincided with the total weight of PtO and Dy₂O₃ contained in the catalyst layer.

### (Example 2-19)

A cathode 17 that was fabricated as follows and the anode 1 were used.

### - Cathode 17 -

A plain weave mesh substrate of 40 mesh woven with nickel fine wire having a diameter of 0.15 mm was used as a conductive material. The conductive substrate was blasted with alumina powder having a weight-average particle diameter of 100 µm or less, cut into 8.5 cm × 17.0 cm, then acid treated in a 6-N hydrochloric acid at room temperature for 10 minutes, washed with water, and dried.

The dried conductive substrate was heated and sintered at 500 °C for 10 minutes using a muffle furnace to form a nickel oxide layer on the surface of the conductive substrate. Using an electronic balance PG 503-S manufactured by Mettler Toledo Corporation, the weight of the conductive substrate after heating and sintering was measured.

Next, a first layer of the catalyst layer was formed on the conductive substrate by repeating the cycle of the application step and precursor layer formation step four times using the coating liquid 3. The resultant was weighed with an electronic balance, and the difference from the weight of the conductive substrate before the formation of the first layer was divided by the area of 8.5 cm × 17.0 cm to calculate the weight of the first layer per unit area.

The weight of Pt contained in the first layer was then calculated assuming that the weight of the first layer coincided with the total weight of PtO and Nd₂O₃ contained in the first layer.

Subsequently, a second layer of the catalyst layer was formed on the conductive substrate having the first layer formed thereon by repeating the cycle of the application step and precursor layer formation step 10 times using the coating liquid 1. Furthermore, the substrate was post-sintered at 500 °C for 1 hour in the air atmosphere to produce a cathode 17.

The cathode 17 was weighed with an electronic balance, and the difference from the weight of the conductive substrate before the formation of the second layer was divided by the area of 8.5 cm × 17.0 cm to calculate the weight of the second layer per unit area.

The weight of Pt contained in the second layer was then calculated assuming that the weight of the second layer coincided with the total weight of PtO and Nd₂O₃ contained in the catalyst layer.

The weight of the catalyst layer was calculated by summing the weight of the first layer and the weight of the second layer, and the weight of Pt in the catalyst layer was calculated by summing the weight of Pt in the first layer and the weight of Pt in the second layer.

### (Example 2-20)

A cathode 18 that was fabricated as follows and the anode 1 were used.

### - Cathode 18 -

Electrolytic Ni foil with a gauge thickness of 16 µm was used as the conductive substrate. One side of this Ni foil was roughened by electrolytic Ni plating. The arithmetic mean roughness Ra of the roughened surface was 0.6 µm.

The nickel foil was made into a porous foil by punching to form circular holes. The aperture ratio was 49 %. The conductive substrate was cut out into a piece of 8.5 cm × 17.0 cm, which was ultrasonically cleaned in isopropyl alcohol for 10 minutes at room temperature, and dried.

The dried conductive substrate was heated and sintered at 400 °C for 10 minutes using a muffle furnace to form a nickel oxide layer on the surface of the conductive substrate. Using an electronic balance PG 503-S manufactured by Mettler Toledo Corporation, the weight of the conductive substrate after heating and sintering was measured.

The coating liquid 5 was used in the application step. The coating liquid 5 was sprayed onto the roughened side surface of the conductive substrate using a spray with compressed air at 0.1 MPa as a carrier gas, and then the conductive substrate was dried at 60 °C for 10 minutes to form the precursor layer.

The conductive substrate having the precursor layer formed thereon was sintered by heating at 400 °C for 10 minutes using a muffle furnace to thermally decompose the precursor layer.

This cycle of the dipping application step, precursor layer formation step, and sintering step was repeated 17 times. Furthermore, the substrate was post-sintered at 400 °C for 1 hour in the air atmosphere to produce a cathode 6.

The cathode 18 was weighed with an electronic balance, and the difference from the weight of the conductive substrate before the formation of the catalyst layer was divided by the area of 8.5 cm × 17.0 cm to calculate the weight of the catalyst layer per unit area.

The weight of Pt contained in the catalyst layer was then calculated assuming that the weight of the catalyst layer coincided with the total weight of PtO and Nd₂O₃ contained in the catalyst layer.

### (Example 2-21)

A cathode 19 that was fabricated as follows and the anode 1 were used.

### - Cathode 18 -

A plain weave mesh substrate of 40 mesh woven with nickel fine wire having a diameter of 0.15 mm was used as a conductive material. The conductive substrate was blasted with alumina powder having a weight-average particle diameter of 100 µm or less, cut into 8.5 cm × 17.0 cm, then acid treated in a 6-N hydrochloric acid at room temperature for 10 minutes, washed with water, and dried.

The dried conductive substrate was heated and sintered at 500 °C for 10 minutes using a muffle furnace to form a nickel oxide layer on the surface of the conductive substrate. Using an electronic balance PG 503-S manufactured by Mettler Toledo Corporation, the weight of the conductive substrate after heating and sintering was measured.

Next, a coating liquid 6 was prepared by mixing diamminedinitro Pt nitric acid solution (manufactured by Tanaka Kikinzoku Kogyo K. K., Pt concentration: 100 g/L), Nd nitrate hexahydrate (manufactured by Kanto Chemical Co., Inc., 3N5), Pd nitrate solution (manufactured by Tanaka Kikinzoku Kogyo K. K., Pd concentration: 100 g/L), and water so that the molar ratio of the Pt element, Nd element, and Ni element was 75:17:8.

A cathode 5 was fabricated under the same conditions as in Example 1-1, except that the cycle of the application step, precursor layer formation step, and sintering step was repeated 17 times using this coating liquid 6. The resultant was weighed with an electronic balance, and the difference from the weight of the conductive substrate before the formation of the catalyst layer was divided by the area of 8.5 cm × 17.0 cm to calculate the weight of the catalyst layer per unit area.

The weight of Pt contained in the catalyst layer was then calculated assuming that the weight of the catalyst layer coincided with the total weight of PtO, Nd₂O₃, and PdO contained in the catalyst layer.

### (Comparative Example 2-1)

As in Comparative Example 1-1, the cathode 101 and the anode 1 were used.

### (Comparative Example 2-2)

As in Comparative Example 1-2, the cathode 102 and the anode 1 were used.

### (Comparative Example 2-3)

As in Comparative Example 1-3, the cathode 103 and the anode 1 were used.

### (Comparative Example 2-4)

As in Comparative Example 1-4, the cathode 104 and the anode 1 were used.

### (Comparative Example 2-5)

As in Comparative Example 1-5, the cathode 105 and the anode 1 were used.

### (Comparative Example 2-6)

A cathode 106 prepared as described below was used.

### - Cathode 106 -

A plain weave mesh substrate of 40 mesh woven with nickel fine wire having a diameter of 0.15 mm was used as a conductive material. The conductive substrate was blasted with alumina powder having a weight-average particle diameter of 100 µm or less, cut into 8.5 cm × 17.0 cm, then acid treated in a 6-N hydrochloric acid at room temperature for 10 minutes, washed with water, and dried.

The dried conductive substrate was heated and sintered at 500 °C for 10 minutes using a muffle furnace to form a nickel oxide layer on the surface of the conductive substrate. Using an electronic balance PG 503-S manufactured by Mettler Toledo Corporation, the weight of the conductive substrate after heating and sintering was measured.

Next, a coating liquid 15 was prepared by mixing diamminedinitro Pt nitric acid solution (manufactured by Tanaka Kikinzoku Kogyo K. K., Pt concentration: 100 g/L), Nd nitrate hexahydrate (manufactured by Kanto Chemical Co., Inc., 3N5), and water so that the molar ratio of the Pt and Nd elements was 45:55.

A cathode 106 was fabricated under the same conditions as in Example 1-1, except that the cycle of the application step, precursor layer formation step, and sintering step was repeated 26 times using this coating liquid 15, and the weights of the catalyst and Pt were calculated.

The above-described tests (1) to (3) and the following test (5) were conducted on each example and each comparative example. Results are summarized in Table 2.

### Test (5) Reverse current cycle test 1 simulating 200 pairs of bipolar electrolyzers

Reverse current cycle tests simulating 200 pairs of bipolar electrolyzers were performed using the three-electrode method using a potentiogalvanostat PARSTAT MC 1000 manufactured by Princeton Applied Research as follows.

First, in 200 pairs of bipolar electrolyzers, the average reverse current through each cell after the electrolysis was stopped was calculated to be 15 A/m² by calculation of the equivalent circuit.

Subsequently, the discharge curves at the above current densities of the cathode and the anode described in each example and each comparative example were obtained.

The cathode was cut out into a piece of 18 mm x 17 mm and secured to a PTFE-coated nickel rod with nickel screws. A Pt mesh was used as the counter electrode and a silver-silver chloride (Ag/AgCl) glass electrode was used as the reference electrode. A 34-wt% potassium hydroxide solution was used as the electrolyte. The temperature was adjusted so that the temperature of the electrolyte was 70 °C. First, a reduction current with a current density of -6 kA/m² was conducted for 1 hour, and then an oxidation current with +15 A/m² was immediately conducted, without performing any open circuit voltage measurements between these. At this time, the potential of the cathode gradually increased from the hydrogen generating potential to a noble potential. The conduction of the current was stopped when the cathode potential reached +1.12 V (vs. RHE). The discharge curve of the cathode was obtained by plotting the absolute value of the accumulated conducted charge amount calculated as the product of the current density and the conduction time on the horizontal axis and the potential of the cathode on the vertical axis.

Next, the anode was cut out into a piece of 18 mm × 17 mm and secured to a PTFE-coated nickel rod with nickel screws. A Pt mesh was used as the counter electrode and a silver-silver chloride (Ag/AgCl) glass electrode was used as the reference electrode. A 34-wt% potassium hydroxide solution was used as the electrolyte. The temperature was adjusted so that the temperature of the electrolyte was 70 °C. First, an oxidation current with a current density of +6 kA/m² was conducted for 1 hour, and then a reduction current with -15 A/m² was immediately conducted, without performing any open circuit voltage measurements between these. At this time, the potential of the anode gradually decreased from the oxygen generating potential to a lower potential. The conduction of the current was stopped when the anode potential reached +0.12 V (vs. RHE). The discharge curve of the anode was obtained by plotting the absolute value of the accumulated conducted charge amount calculated as the product of the current density and the conduction time on the horizontal axis and the potential of the anode on the vertical axis.

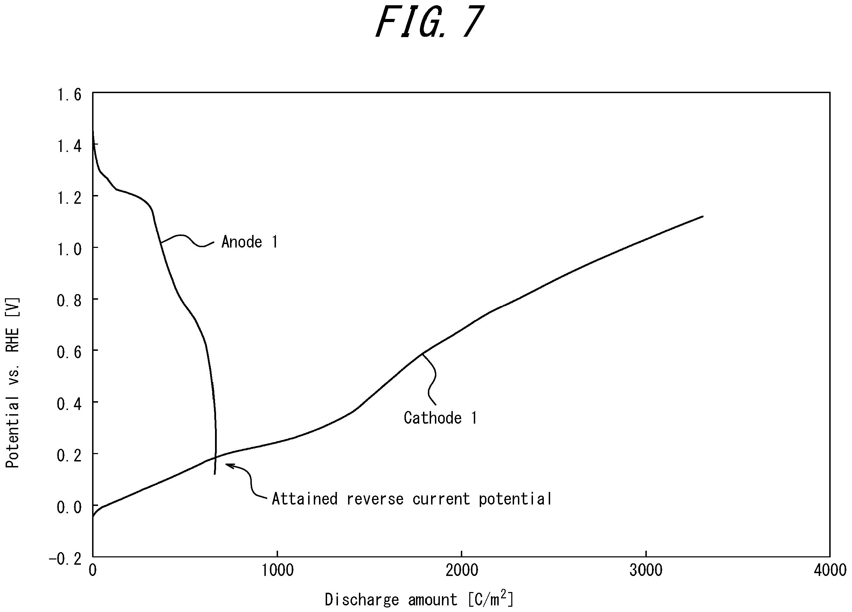

The discharge curves of the cathode and the anode were superimposed, and the potential at which they intersected was identified as the attained reverse current potential caused by interruption of conduction. One example thereof is depicted in FIG. 7.

Reverse current cycle tests were conducted as follows, under the condition of the reverse current density obtained as described above and the attained reverse current potential in the respective examples and comparative examples.

The cathode was cut out into a piece of 18 mm × 17 mm and secured to a PTFE-coated nickel rod with nickel screws. A Pt mesh was used as the counter electrode and a silver-silver chloride (Ag/AgCl) glass electrode was used as the reference electrode. A 34-wt% potassium hydroxide solution was used as the electrolyte. The temperature was adjusted so that the temperature of the electrolyte was 70 °C.

The overvoltage at a current density of -6 kA/m² was measured under these conditions. At this time, the ohmic loss that could not be eliminated by the three-electrode method was measured by an AC impedance method, and the overvoltage was corrected based on the measured value for the ohmic loss. Next, a reduction current with a current density of -6 kA/m² was conducted for 5 hours as a pretreatment for the cathode, and then an oxidation current with +15 A/m² was immediately conducted, without performing any open circuit voltage measurements between these. At this time, the potential of the cathode gradually increased from the hydrogen generating potential to a noble potential. When the cathode potential reached the attained reverse current potential of the respective examples, a reduction current with -6 kA/m² was immediately conducted for 1 minute, without performing any open circuit voltage measurements between these. 10000 reverse current cycles were applied, each cycle composed of a pair of the oxidation current and the reduction current for 1 minute. After that, the overvoltage at a current density of -6 kA/m² was again measured, and the result was identified as the overvoltage after the reverse current cycle test.

**[Table 2]**

| | | Cathode | | | | | | | | | | Anode | | (5) Reverse current cycle test 1 simulating 200 pairs | | |
|---|---|---|---|---|---|---|---|---|---|---|---|---|---|---|---|---|
| | | Substrate | Pt | Lanthanoid | | Catalyst layer structure | Catalyst weight | Pt weight | (1) Amount of discharge | (2) Electric double layer capacitance | | Type | (3) Amount of discharge | Reverse electric potential | Initial overvoltage | Overvoltage after test |
| | | | Molar ratio | Molar ratio | Element | | [g/m²] | [g/m²] | [C/m²] | [F/m²] | | | [C/m²] | [V vs. RHE] | [mV] | [mV] |
| Example 2-1 | Cathode 1 | Ni mesh | 70 | 30 | Nd | Pt70Nd30 | 8.0 | 5.5 | 3250 | 0.044 | Anode 1 | Ni expanded metal | 670 | 0.17 | 106 | 98 |
| Example 2-2 | Cathode 2 | Ni mesh | 80 | 20 | Nd | Pt80Nd20 | 7.7 | 5.9 | 2480 | 0.033 | Anode 1 | Ni expanded metal | 670 | 0.22 | 109 | 108 |
| Example 2-3 | Cathode 3 | Ni mesh | 90 | 10 | Nd | Pt90Nd10 | 6.7 | 5.7 | 1680 | 0.027 | Anode 1 | Ni expanded metal | 670 | 0.32 | 101 | 101 |
| Example 2-4 | Cathode 4 | Ni mesh | 82 | 18 | Nd | Pt75Nd25/Pt75Ni25 | 8.0 | 60 | 2810 | 0.041 | Anode 1 | Ni expanded metal | 670 | 0.12 | 104 | 99 |
| Example 2-5 | Cathode 5 | Ni mesh | 82 | 18 | Nd | Pt75Nd17Ni8 | 7.8 | 3.5 | 2780 | 0.039 | Anode 1 | Ni expanded metal | 670 | 0.12 | 105 | 106 |
| Example 2-6 | Cathode 6 | Electrolytic Ni foil (Ra 0.9µm) | 75 | 25 | Nd | Pt75Nd25 | 8.1 | 5.9 | 4900 | 0.070 | Anode 1 | Ni expanded metal | 670 | 0.12 | 95 | 100 |
| Example 2-7 | Cathode 7 | Ni mesh | 70 | 30 | Nd | Pt70Nd30 | 5.3 | 3.7 | 2150 | 0.029 | Anode 1 | Ni expanded metal | 670 | 0.22 | 104 | 104 |
| Example 2-8 | Cathode 8 | Ni mesh | 70 | 30 | Nd | Pt70Nd30 | 19.9 | 13.7 | 8000 | 0.115 | Anode 1 | Ni expanded metal | 670 | 0.04 | 109 | 115 |
| Example 2-9 | Cathode 9 | Ni mesh | 70 | 30 | Nd | Pt70Nd30 | 2.8 | 1.9 | 1120 | 0.015 | Anode 1 | Ni expanded metal | 670 | 0.42 | 102 | 113 |
| Example 2-10 | Cathode 10 | Ni mesh | 70 | 30 | Nd | Pt70Nd30 | 24.5 | 16.9 | 9650 | 0.140 | Anode 1 | Ni expanded metal | 670 | 0.04 | 115 | 114 |
| Example 2-11 | Cathode 1 | Ni mesh | 70 | 30 | Nd | Pt70Nd30 | 8.0 | 5.5 | 3250 | 0.044 | Anode 2 | Ni mesh | 850 | 0.22 | 108 | 100 |
| Example 2-12 | Cathode 1 | Ni mesh | 70 | 30 | Nd | Pt70Nd30 | 8.0 | 5.5 | 3250 | 0.044 | Anode 3 | Blasted Ni expanded | 1810 | 0.57 | 104 | 128 |
| Example 2-16 | Cathode 11 | Ni mesh | 65 | 35 | Nd | Pt65Nd35 | 9.3 | 60 | 1180 | 0.018 | Anode 1 | Ni expanded metal | 670 | 0.56 | 133 | 140 |
| Example 2-17 | Cathode 12 | Ni mesh | 95 | 5 | Nd | Pt95Nd5 | 6.9 | 6.1 | 3910 | 0.058 | Anode 1 | Ni expanded metal | 670 | 0.15 | 101 | 128 |
| Example 2-18 | Cathode 13 | Ni mesh | 75 | 25 | Sm | Pt75Sm25 | 8.4 | 6.1 | 3510 | 0.046 | Anode 1 | Ni expanded metal | 670 | 0.17 | 95 | 104 |
| Example 2-19 | Cathode 14 | Ni mesh | 75 | 25 | Gd | Pt75Gd25 | 8.5 | 6.1 | 2470 | 0.039 | Anode 1 | Ni expanded metal | 670 | 0.22 | 105 | 119 |
| Example 2-20 | Cathode 15 | Ni mesh | 75 | 25 | Tb | Pt75Tb25 | 8.7 | 6.2 | 2770 | 0.041 | Anode 1 | Ni expanded metal | 670 | 0.21 | 96 | 125 |
| Example 2-21 | Cathode 16 | Ni mesh | 75 | 25 | Dy | Pt75Dy25 | 8.2 | 5.8 | 2640 | 0.038 | Anode 1 | Ni expanded metal | 670 | 0.22 | 93 | 112 |
| Example 2-22 | Cathode 17 | Ni mesh | 76 | 24 | Nd | Pt70Nd30IPt90Nd10 | 8.7 | 6.4 | 2200 | 0.030 | Anode 1 | Ni expanded metal | 670 | 0.24 | 113 | 129 |
| Example 2-23 | Cathode 18 | Electrolytic Ni foil (Ra 0.6 µm) | 75 | 25 | Nd | Pt75Nd25 | 8.2 | 6.0 | 2610 | 0.038 | Anode 1 | Ni expanded metal | 670 | 0.22 | 103 | 106 |
| Example 2-24 | Cathode 19 | Ni mesh | 82 | 18 | Nd | PI75Nd17PdA | 7.9 | 5.9 | 2670 | 0.035 | Anode 1 | Ni expanded metal | 670 | 0.22 | 100 | 90 |
| Comp. Ex. 2-1 | Cathode 101 | Ni mesh | 100 | 0 | | Pt | 5.8 | 5.4 | 660 | 0.018 | Anode 1 | Ni expanded metal | 670 | 0.72 | 105 | 190 |
| Comp. Ex. 2-2 | Cathode 102 | Ni mesh | 100 | 0 | | Pt | 10.6 | 9.8 | 1220 | 0.025 | Anode 1 | Ni expanded metal | 670 | 0.62 | 103 | 175 |
| Comp. Ex. 2-3 | Cathode 103 | Ni mesh | 50 | 50 | Cc | Pt50Cc50 | 6.7 | 3.4 | 4650 | 0.086 | Anode 1 | Ni expanded metal | 670 | 0.22 | 103 | 166 |
| Comp. Ex. 2-4 | Cathode 104 | Ni mesh | 50 | 50 | Cc | Pt50Cc50 | 3.9 | 2.0 | 1930 | 0.035 | Anode 1 | Ni expanded metal | 670 | 0.52 | 104 | 180 |
| Comp. Ex. 2-5 | Cathode 105 | Ni mesh | 64 | 36 | Cc | Pt64Cc36 | 7.6 | 4.8 | 3280 | 0.082 | Anode 1 | Ni expanded metal | 670 | 0.22 | 101 | 152 |
| Comp. Ex. 2-6 | Cathode 106 | Ni mesh | 45 | 55 | Nd | Pt45Nd55 | 12.5 | 5.9 | n/a | n/a | n/a | n/a | n/a | n/a | Electrolytic current not generated | n/a |

In Test (5), the cathode overvoltage in Comparative Examples 2-1 to 2-5 all increased by 50 mV or more after the test, whereas an increase in the overvoltage in Examples 2-1 to 2-21 was suppressed to 30 mV or less, indicating significantly higher durability against the 10000 reverse conduction cycles.

In Comparative Example 2-6, no electrolytic current was generated and no hydrogen bubbles were observed due to electrolysis. This is considered to be because the oxide or hydroxide of the lanthanoid element present in the catalyst layer is an insulator or conductor with higher electrical resistance than metals, and if the ratio of the lanthanoid element to Pt is too high, the electron conductivity in the catalyst layer is significantly increased. Furthermore, it is considered that the initial overvoltage in Example 2-13 was higher than those in Examples 2-1 to 2-12 and 2-14 to 2-21 because the higher ratio of the lanthanoid element to Pt is responsible for the lower electron conductivity of the catalyst layer for the same reasons as above.

The results indicate that a cathode with a catalyst layer containing Pt element and a lanthanoid element that becomes electrochemically stable as trivalent ions within the potential window of water of pH 7 or higher and pH 16 or lower in the molar ratio specified by the present disclosure can maintain a high energy conversion efficiency over a long period in 200 pair electrolyzer for alkaline water electrolysis including 199 bipolar electrolytic cells.

When Examples 2-1 to 2-12 are compared with Comparison Examples 2-1 to 2-5, the results in Test (5) were generally similar to those of Examples 1-1 to 1-12 and Comparison Examples 1-1 to 1-5 in Test (4).

The overvoltage increase after 1500 conduction interruptions in Comparative Examples 1-5 in Test (4) was greater than the overvoltage increase after 10,000 reverse conduction cycles in Test (5) in Comparative Examples 2-1 to 2-5, despite the smaller number of cycles. This is considered to be because the interruption time where reverse current occurs in Test (4) was 5 minutes, whereas the time for applying reverse current was only a few tens of seconds in Test (5), which was very short, resulting in smaller damage of the cathode per cycle in Test (5).

When Example 2-4 is compared with Example 2-19, the overvoltage increase in Test (5) was smaller in Example 2-4. This is considered to be because the cathode 4 in Example 2-4 contained the same Ni element as the conductive substrate in the first layer of the catalyst layer, which improved the affinity between the catalyst layer and the conductive substrate and suppressed delamination and detachment of the catalyst layer from the substrate due to reverse conduction.

Example 2-21 had a predominantly lower overvoltage after 10,000 reverse conduction cycles than Examples 2-1 to 2-20. After embedding the cathodes after these tests with epoxy resin, cross-section samples were prepared by broad ion beam (BIB) processing with Ar ion beam. These BIB processed cross sections were observed under an SEM (S-4800 manufactured by Hitachi High-Technologies Corporation) to obtain backscattered electron images (at magnifications of ×3000, ×10000, and x30000). Observations of these cross-sections indicated that Example 2-21 had a significantly thinner NiO layer between the substrate Ni and the catalyst layer than Examples 2-1 to 2-20. This is believed to be because Pd has the ability to dissociate hydrogen molecules and absorb hydrogen, the hydrogen molecules generated by electrolysis are dissociated into atomic hydrogen and absorbed into the catalyst layer. The reduction power of this atomic hydrogen suppresses the growth of the NiO layer due to oxidation of the substrate Ni caused by reverse conduction. It is considered that since the NiO layer is an insulator or a conductor with higher electrical resistance than metals, this suppression of growth contributes to suppressing an increase in overvoltage.

Next, Examples 3-1 to 3-2 and Comparative Examples 3-1 to 3-3 are described.

### (Example 3-1)

A bipolar element was fabricated under the same conditions as in Example 1-1, except that a cathode 20 that was fabricated as described below and the anode 4 were used, and was named Example 3-1.

### - Cathode 20 -

A cathode 20 was fabricated under the same conditions as in Example 1-1 except that the cycle of the application step, precursor layer formation step, and sintering step was repeated 17 times using the coating liquid 4, and the weights of the catalyst and Pt were calculated.

### - Anode 4 -

A suspension was prepared by mixing and stirring 100 parts by mass of Ni oxide powder having a particle diameter of 0.2 µm to 2 µm, 2.25 parts by mass of gum arabic, 0.7 parts by mass of carboxymethylcellulose, 0.001 parts by mass of Na lauryl sulfate, and 100 parts by mass of water. A spray drying granulator was used to prepare granules having a grain diameter of 5 µm to 50 µm from the suspension by the spray drying method.

Ni expanded metal with an SW of 3.0 mm, an LW of 4.5 mm, a thickness of 1.2 mm, and an aperture ratio 54% was prepared as the Ni porous substrate and blasted. The above granules were sprayed onto the Ni porous substrate using a plasma spraying method. Without considering the pores of the Ni porous substrate, 0.5 kg/m² was sprayed on each side, totaling 1.0 kg/m² on both sides. In the plasma spraying, a mixture of argon and nitrogen in the ratio of 1:0.8 was used as the plasma gas. This electrode was set in a quartz tube. The quartz tube was inserted into a tubular furnace, the inside of the quartz tube was heated to 200 °C, and a stream of hydrogen was continuously supplied into the quartz tube in order to reduce the catalyst layer. The Ni porous substrate having the Ni catalyst layer formed thereon, prepared by the above steps, was used as an anode 4.

### (Example 3-2)

A bipolar element was fabricated under the same conditions as in Example 3-1, except that the cathode 4 was used, and was named Example 3-2.

### (Comparative Example 3-1)

A bipolar element was fabricated under the same conditions as in Example 3-1, except that the cathode 101 was used, and was named Comparative Example 3-1.

### (Comparative Example 3-2)

A bipolar element was fabricated under the same conditions as in Example 1-1, except that a cathode 107 that was fabricated as described below and the anode 4 were used, and was named Comparative Example 3-2.

### - Cathode 107 -

A coating liquid 16 was prepared by mixing diamminedinitro Pt nitric acid solution (manufactured by Tanaka Kikinzoku Kogyo K. K., Pt concentration: 100 g/L), Ce(III) nitrate hexahydrate (manufactured by Kanto Chemical Co., Inc., Deer special grade), and water so that the molar ratio of the Pt and Ce elements was 75:25.

A cathode 107 was fabricated under the same conditions as in Example 1-1, except that the cycle of the application step, precursor layer formation step, and sintering step was repeated 17 times using this coating liquid 16. The weight of Pt contained in the catalyst layer was then calculated assuming that the weight of the catalyst layer coincided with the total weight of PtO and CeO₂ contained in the catalyst layer.

### (Comparative Example 3-3)

A bipolar element was fabricated under the same conditions as in Example 1-1, except that a cathode 108 that was fabricated as described below and the anode 4 were used, and was named Comparative Example 3-3.

### - Cathode 108 -

A cathode 108 was fabricated in the same manner as in Example 1-4 except for the following. A first layer of the catalyst layer was formed on the conductive substrate by repeating the cycle of the application step and the precursor layer formation step five times using the coating liquid 4, and the weight of Pt in the first layer was calculated assuming that the weight of the first layer coincided with the total weight of Pt and NiO contained in the first layer. A second layer of the catalyst layer was formed on the conductive substrate having the first layer formed thereon by repeating the cycle of the application step and precursor layer formation step 11 times, and the weight of Pt in the second layer was calculated assuming that the weight of the second layer coincided with the sum of Pt and CeO₂ contained in the catalyst layer.

The above-described tests (1) to (3) and the following tests (6) and (7) were performed on each example and each comparative example. Results are summarized in Table 3.

### Test (6) Calculation of [IPt / (IPt + IPtO)]

X-ray diffraction measurements were performed using A fully automated multipurpose X-ray diffractometer SmartLab manufactured by Rigaku Corporation. The sample was placed on a Si non-reflective sample plate to avoid background from the sample plate. To reduce leakage of X-rays from the sample, the size of the sample was made into a 2 cm square or greater, and the sample was placed so that the center thereof coincided with the center of the X-ray beam. The height of the sample was then adjusted and the measurement was performed. The measurement was performed using a Cu target as a rotating counter cathode and CuKα radiation was used. The X-ray power was set to a tube voltage of 45 kV and a tube current of 200 mA. The optical arrangement used was a reflective parallel optical system with a multilayer mirror on the incident side. The optical elements on the incident side were a 2.5-degree solar slit and a longitudinal divergence slit with a width of 10 mm, and a divergence slit width was 1 mm. The optical elements on the light-receiving side were a 0.5-degree PSA (Parallel Slit Analyzer) and HyPix-3000 hybrid multidimensional pixel detector. The measurement was performed by the θ/2θ method in which scanning was performed so that the angle between the sample surface and the X-ray source and the angle between the sample surface and the detector were constant, and the diffraction angle defined by 20 was in the range of 10 to 90 degrees. The angle step was set to 0.05 degrees and the scanning speed was set to 2 degrees/minute, and the X-ray diffraction chart of the cathode in each example was obtained.

Peaks in the obtained X-ray diffraction charts were separated using the graph processing software "Igor Pro". Peak separation was performed in the angular range from 20 = 25 degrees to 20 = 42 degrees. After subtracting the background of the straight line connecting the measurement points at both ends of the angle, peak separation was performed assuming three Gaussian distribution functions with medians at (i) 30.0 to 36.0 degrees, (ii) 36.5 to 38.0 degrees, or (iii) 38.0 to 42.0 degrees, using the peak intensity, peak median, and full width at half maximum as parameters. Although a combination of CuKα1 and CuKα2 contributed to each peak, they were not separated and treated as the same peak. The three Gaussian distribution functions correspond to reflections on (i) the (200) and (111) planes of PtO, (ii) the (111) plane of NiO, and (iii) the (111) plane of Pt metal. After peak separation, each peak area was determined and [IPt / (IPt + IPtO)] was calculated where IPt represents the peak area of (iii) and IPtO represents the peak area of (i).

### Test (7) Current conduction interruption cycle test 2 of bipolar electrolyzer

In each of the examples and comparative examples, a bipolar electrolyzer stacked in the order illustrated in FIG. 4 was fabricated as follows. An anode terminal cell unit 51a having the anode described in the respective examples and comparative examples, the diaphragm described above, three sets of zero-gap bipolar elements in the respective examples and comparative examples stacked having the above-described diaphragm interposed therebetween, the diaphragm described above, and a cathode terminal cell 51c having the cathode described in the respective examples and comparative examples were stacked to form a bipolar electrolyzer.

Next, an electrolysis device illustrated in FIG. 3 was fabricated using this bipolar electrolyzer.

The electrolysis device comprises a bipolar electrolyzer 50, a tubing pump 71 for circulating the electrolyte, and gas-liquid separation tanks 72 for separating the electrolyte from hydrogen and/or oxygen. A 30 % KOH aqueous solution is sealed as the electrolyte in each gas-liquid separation tank 72 and in the bipolar electrolyzer 50. The electrolyte is caused by the tubing pump 71 to circulate through the anode compartments 5a of the bipolar electrolyzer 50 and the gas-liquid separation tank 72 for the anode, and through the cathode compartments 5c of the bipolar electrolyzer 50 and the gas-liquid separation tank 72 for cathode. The temperature was adjusted to 90 °C.

In the above electrolysis device, the gas separated in each gas-liquid separation tank 72 is recovered through a pressure gauge 78, a pressure control valve 80, an oxygen concentration meter 75, or a hydrogen concentration meter 76. In addition, electric power can be controlled by the rectifier 74. In addition, flow meters 77 and a heat exchanger 79 are provided in the passage of the circulating electrolyte. Arrows in FIG. 3 indicate directions in which the circulating liquid (electrolyte) and the gas flow.

The circulation circuit used SGP carbon steel pipes provided with Teflon^{®} lining on the surface inside the portion to be brought in contact with electrolytic solution, and 20A pipes was used. The gas-liquid separation tank 72 used had a height of 1,400 mm and a volume of 1 m³.

The gas-liquid separation tank 72 used had a height of 1,400 mm and a volume of 1 m³.

The amount of liquid in each gas-liquid separation tank 72 was about 50 % of the design volume.

In the electrolyzer of external header type, external pipes (each including an anode inlet header 10ai, a cathode inlet header lOci, an anode outlet header 10ao, and a cathode outlet header lOco) for flowing an electrolyte are provided at four locations in an electrolytic frame, which is the casing of a bipolar element. Each of these external pipes is connected via an external hose to each electrode compartment of the electrolyzer.

These piping structures are called external header structures. The external header pipes are divided into cathode-side external header pipes and anode-side external header pipes.

As such, in each element, the electrolyte enters the cathode compartment 5c from the cathode inlet header lOci via the external hose, and the electrolyte flows from the cathode compartment 5c to the cathode outlet header lOco via the external hose. Similarly, on the anode side, the electrolyte enters the anode compartment 5a from the anode inlet header 10ai via the external hose, and the electrolyte flows from the anode compartment 5a to the anode outlet header 10ao via the external hose. Since the input header of the external header is on the lower side of the electrolytic frame and the output header on the upper side, the electrolyte flows from the bottom to the top. Further, it rises in a substantially vertical direction with respect to the electrode surface. A thermocouple is installed in each external hose of each cell, and the temperature difference before and after passing through the element can be measured.

In this example, since the anode compartment 5a and the cathode compartment 5c each have 29 compartments, the electrolyte is caused to flow from the inlet header toward the outlet header in each of the 29 compartments.

Since electrolysis produces hydrogen gas in the cathode compartment 5c and oxygen gas in the anode compartment 5a, there are formed a mixed-phase flow of the electrolyte and the hydrogen gas in the cathode outlet header lOco and a mixed-phase flow of the electrolyte and the oxygen gas in the anode outlet header 10ao.

From the rectifier 74, the bipolar electrolyzer 50 was energized with respect to the area of the cathode and the anode under the conditions of Electrolysis tests 1 or Electrolysis tests 2 described below. The pressure in the tank after the start of current conduction was measured with each pressure gauge 78 and adjusted so that the cathode-side pressure was 50 kPa and the oxygen-side pressure was 49 kPa. The pressure adjustment was carried out by installing a control valve 80 downstream of each pressure gauge 78.

In the above electrolysis device, the gas separated in each gas-liquid separation tank 72 is recovered through a pressure gauge 78, a pressure control valve 80, an oxygen concentration meter 75, or a hydrogen concentration meter 76. In addition, electric power can be controlled by the rectifier 74. In addition, flow meters 77 and a heat exchanger 79 are provided in the passage of the circulating electrolyte.

Note that the rectifier, the oxygen concentration meter, the hydrogen concentration meter, the pressure gauges, the tubing pump, the gas-liquid separation tanks, the water replenisher, and the like were all those commonly used in the technical field, and the electrolysis device for alkaline water electrolysis was prepared using these components.

During hydrogen generating electrolysis using the above electrolysis device, the potential of the zero-gap bipolar element was equal to that of the cathode, and the PTFE-coated Pt wire fixed near the cathode in the cathode compartment of the zero-gap bipolar element served as the RHE electrode because it came in contact with the hydrogen generated by the electrolysis and was at the hydrogen generation potential. Hence, the potential difference between the PTFE-coated Pt wire and the zero-gap bipolar element was measured, and this potential difference was determined as the cathode overvoltage.

Using the above electrolysis device, water electrolysis was performed by continuously conducting positive current for 100 hours so that the current density was 6 kA/m², and the electrolysis was then stopped for 5 minutes. Thereafter, a positive current of 6 kA/m² was again conducted for 5 minutes and stopped for 5 minutes. In total, 500 current conduction interruption cycles were performed, each cycle composed of one positive current conduction for 5 minutes and one interruption for 5 minutes. The average of the cell voltages of the two cells other than the anode terminal cell unit 51a and the cathode terminal cell 51c in the first positive current conduction for 5 minutes after 100 hours of positive current conduction was identified as the initial cell voltage, the average of the cathode overvoltages of the above-described two cells at this time was identified as the initial overvoltage, and the average of the cathode overvoltages of the above-described two cells in the positive current conduction in the 500^{th} current conduction interruption cycle was identified as the overvoltage after the test.

**[Table 3]**

| | | Cathode | | | | | | | | | | | Anode | | (7) Current conduction interruption cycle test | | |
|---|---|---|---|---|---|---|---|---|---|---|---|---|---|---|---|---|---|
| | | Substrate | Pt | Lanthanoid | | Catalyst layer structure | Catalyst weight | Pt weight | (1) Amount of discharge | (2) Electric double layer capacitance | (6)[IPt/ (IPt+IPtO)] | | Type | (3) Amount of discharge | Initial overvoltage | Initial cell voltage | Overvoltage after test |
| | | | Molar ratio | Molar ratio | Element | | [g/m²] | [g/m²] | [C/m²] | [F/m²] | | | | [C/m²] | [mV] | [V] | [mV] |
| Example 3-1 | Cathode 20 | Ni mesh | 75 | 25 | Nd | Pt75Nd25 | 8.2 | 6.0 | 2930 | 0.038 | 0.027 | Anode 4 | Plasma sprayed and reduced Ni expanded metal | 38000 | 88 | 1.82 | 108 |
| Example 3-2 | Cathode 4 | Ni mesh | 82 | 18 | Nd | Pt75Nd25/Pt75Ni25 | 8.0 | 6.0 | 2810 | 0.041 | 0.221 | Anode 4 | Plasma sprayed and reduced Ni expanded metal | 38000 | 91 | 1.81 | 90 |
| Comp. Ex. 3-1 | Cathode 101 | Ni mesh | 100 | 0 | | Pt | 5.8 | 5.4 | 660 | 0.018 | 1.000 | Anode 4 | Plasma sprayed and reduced Ni expanded metal | 38000 | 110 | 1.89 | 344 |
| Comp. Ex. 3-2 | Cathode 107 | Ni mesh | 75 | 25 | Ce | Pt75Ce25 | 8.3 | 6.0 | 4320 | 0.056 | 0.027 | Anode 4 | Plasma sprayed and reduced Ni expanded metal | 38000 | 103 | 1.89 | 254 |
| Comp. Ex. 3-3 | Cathode 108 | Ni mesh | 82 | 18 | Ce | Pt75Ce25/Pt75Ni25 | 7.6 | 5.7 | 4120 | 0.056 | 0.066 | Anode 4 | Plasma sprayed and reduced Ni expanded metal | 38000 | 102 | 1.87 | 238 |

In Test (7), the cathode overvoltage in Comparative Examples 3-1 to 3-3 all increased by 150 mV or more after the test, whereas an increase in the overvoltage in Examples 3-1 to 3-3 was suppressed to 40 mV or less, indicating significantly higher durability against 500 interruptions of current conduction.

The results indicate that a cathode with a catalyst layer containing Pt element and a lanthanoid element that becomes electrochemically stable as trivalent ions within the potential window of water of pH 7 or higher and pH 16 or lower in the molar ratio specified by the present disclosure had high durability.

When Example 3-1 is compared with Comparative Example 3-2, it can be seen that the durability against interruptions of current conduction differed greatly depending on whether Nd or Ce was included in the catalyst layer. The reason for this is considered to be that while Nd is electrochemically stable as trivalent ions within the potential window of water of pH 7 or higher and pH 16 or lower, Ce undergoes redox reactions from trivalent to tetravalent and from tetravalent to trivalent within the same potential window of water of pH 7 or higher and pH 16 or lower.

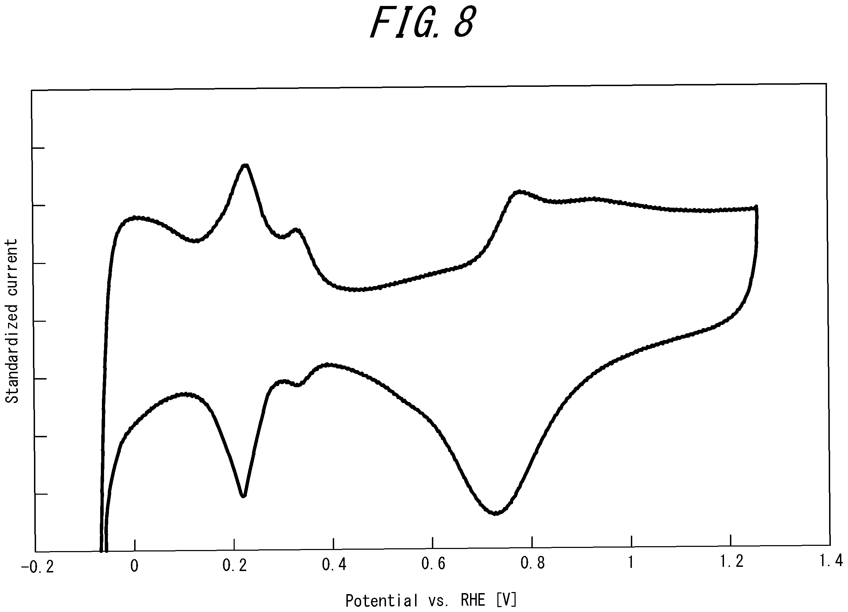

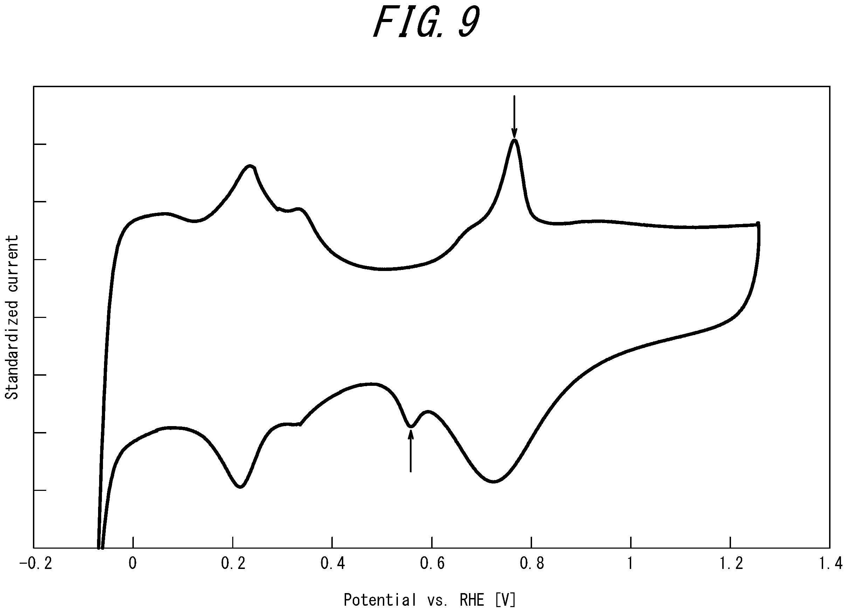

The results of the cyclic voltammetry of the cathode 20 measured at a potential sweep rate of 100 mV/sec in an 8-M KOH at 70 °C is illustrated in FIG. 8, and the results of the cyclic voltammetry of the cathode 105 measured under similar conditions are illustrated in FIG. 9. In FIG. 9, redox reactions with the oxidation peak near +0.77 V vs. RHE paired with the reduction peak near +0.56 V vs. RHE are observed, and these are not present in FIG. 8. According to Atlas of Electrochemical Equilibria in Aqueous Solutions (by Marcel Pourbaix, published by the National Association of Corrosion Engineers, 1974), these redox reactions are considered to be redox reactions between Ce³⁺ and Ce⁴⁺.

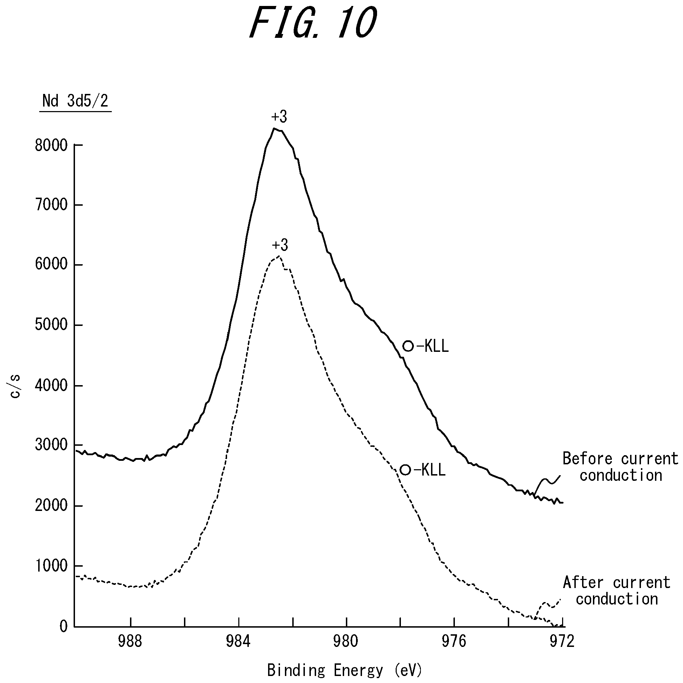

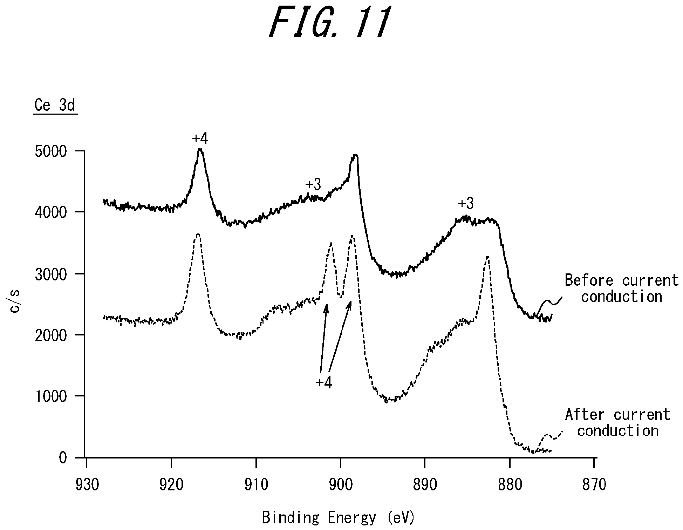

Hence, the chemical state of Nd in the cathode 20 to which a positive current with a current density of 6 kA/m² was conducted for 5 hours, and the chemical state of Ce in the cathode 105 to which a positive current with a current density of 6 kA/m² was conducted for 5 hours, in a three-electrode cell, were analyzed by X-ray photoemission spectroscopy. Each electrode was cut into a size of about 3 mm × 20 mm and placed on a recess holder provided with the apparatus. A molybdenum mask with a hole diameter of 5 mm was placed over it, and the mask was fixed with a special plate spring and screws to ground the sample. X-ray photoelectron spectroscopy measurements were performed using VersaProbe II manufactured by ULVAC Phi under the following conditions: the excitation source was monochromatized Al Kα 15 kV × 3.3 mA, the analysis size was approximately 200 µm φ, the pass energy was 23.5 eV (narrow scan), and the energy step was 0.1 eV, without charge correction. The analysis results of the cathode 20 is illustrated in FIG. 10, and the analysis results of the cathode 105 is illustrated in FIG. 11. It was observed that Nd ions remained trivalent in the cathode 20 both before and after current conduction. However, while Ce in the cathode 105 was present in the form of trivalent and tetravalent ions before current conduction, it was present mainly in the form of tetravalent ions after current conduction, meaning that the valence state changed during current conduction.

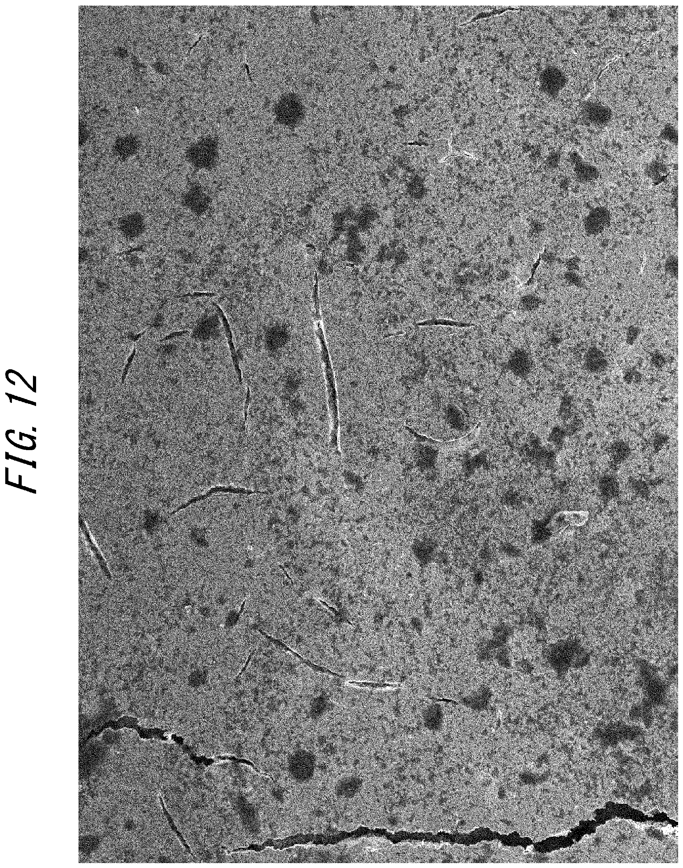

In addition, the surfaces of the cathode 20 and the cathode 105 after Test (7) were observed under an SEM. A significant detachment of the catalyst layer was observed from the cathode 105. In addition, flake-like cracks were observed in areas where the catalyst layer barely remained. The surface of the catalyst layer of the cathode 20 after Test (7) (magnification: 3000×) is depicted in FIG. 12. In addition, the surface of the catalyst layer that barely remained on the cathode 105 after Test (7) (magnification: 3000×) is depicted in FIG. 12.

From the above, it is considered that due to the redox reactions of Ce from trivalent to tetravalent and from tetravalent to trivalent within the potential window of water of pH 7 or higher and pH 16 or lower, the change of the crystal structure in the catalyst layer led to the collapse of the catalyst layer and detachment from the substrate, resulting in low durability against current conduction interruption cycle. On the other hand, it is considered that since Nd is electrochemically stable as trivalent ions within the same potential window of water of pH 7 or higher and pH 16 or lower, high durability against reverse current conduction was demonstrated.

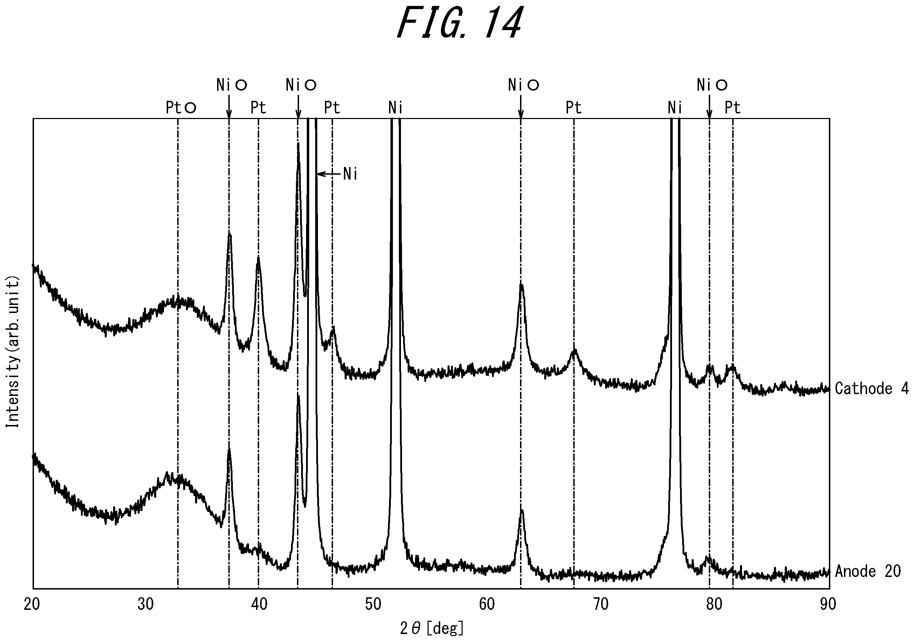

When Example 3-1 is compared with Example 3-2, the overvoltage increase after the conduction interruption cycle test was more effectively suppressed in Example 3-2. This is considered to be because of the fact that the ratio of Pt element present as a metal in the catalyst layer and its crystallinity in the cathode 4 of Example 3-2 were higher than those in the cathode 20 of Example 3-1. The XRD measurement results of the cathode 20 and the cathode 4 are depicted in FIG. 14. As indicated by the comparison of [IPt / (IPt + IPtO)], it is understood that Pt in the catalyst layer was primarily present as PtO in an amorphous form in the cathode 20 of Example 3-1, whereas Pt was primarily Pt crystals in the cathode 4 of Example 3-2. It is considered that although PtO in the cathode catalyst layer is reduced to crystals of Pt metal by electrolytic reduction caused by positive current conduction, crystallization to Pt metal prior to electrolysis improves the adhesiveness of Pt crystal particles in the catalyst layer, which suppressed depletion of the catalyst layer. Although the mechanism is unknown, the present inventors have confirmed that by forming a catalyst layer containing Pt and Ni as the first layer and a catalyst layer containing Pt and a lanthanoid element as the second layer, the growth of crystals of Pt metal was promoted compared to simply forming a catalyst layer containing Pt and a lanthanoid element.

From this result, it was discovered that the value of [IPt / (IPt + IPtO)] is more preferably 0.1 or more, where IPt represents the peak area of X-rays diffracted by the (111) plane of Pt metal in the catalyst layer and IPtO represents the peak area of X-rays diffracted by the (200) and (111) planes of PtO.

However, as indicated in Comparative Example 3-1, even if the X-ray diffraction peaks meet the above conditions, this effect cannot be achieved without the present disclosure that includes a lanthanoid element that is electrochemically stable as trivalent ions within the potential window of water of pH 7 or higher and pH 16 or lower in the catalyst layer.

Furthermore, compared to Examples 1-1 to 1-12, the initial cell voltages were lower in Examples 3-1 and 3-2. This is the effect of the anodes because no catalyst layer was formed in the anodes 1 to 3 in Examples 1-1 to 1-12, whereas the catalyst layers were formed in the anode 4 in Examples 3-1 and 3-2. Generally, when a catalyst layer is formed on the anode, the amount of reverse discharge increases, and the potential of the cathode is swept to be nobler by the reverse current caused by interruption of current conduction, resulting in greater degradation due to reverse conduction. For this reason, there is generally a trade-off relationship between cell voltage and durability. From this viewpoint, the present disclosure is significant in that high durability against interruption of conduction can be achieved even when an anode having a catalyst layer formed thereon and a bipolar element are formed in order to further increase the energy efficiency of hydrogen production by electrolysis.

Next, Examples 4-1 to 4-4 and comparative examples 4-1 to 4-3 are described.

### (Example 4-1)

As in Example 3-1, the cathode 20 and the anode 4 were used.

### (Example 4-2)

As in Example 3-2, the cathode 4 and the anode 4 were used.

### (Example 4-2)

As in Example 3-2, the cathode 4 and the anode 4 were used.

### (Example 4-3)

A cathode 21 that was fabricated as follows and the anode 4 were used.

### - Cathode 21 -

A cathode 21 was fabricated in the same manner as in Example 1-4 except for the following. A first layer of the catalyst layer was formed on the conductive substrate by repeating the cycle of the application step and the precursor layer formation step twice using the coating liquid 4, and the weight of Pt in the first layer was calculated assuming that the weight of the first layer coincided with the total weight of Pt and NiO contained in the first layer. A second layer of the catalyst layer was formed on the conductive substrate having the first layer formed thereon by repeating the cycle of the application step and precursor layer formation step 14 times, and the weight of Pt in the second layer was calculated assuming that the weight of the second layer coincided with the sum of Pt and Nd₂O₃ contained in the catalyst layer.

### (Example 4-4)

A cathode 22 that was fabricated as follows and the anode 4 were used.

### - Cathode 21 -

A cathode 22 was fabricated in the same manner as in Example 1-4 except for the following. A first layer of the catalyst layer was formed on the conductive substrate by repeating the cycle of the application step and the precursor layer formation step eight times using the coating liquid 4, and the weight of Pt in the first layer was calculated assuming that the weight of the first layer coincided with the total weight of Pt and NiO contained in the first layer. A second layer of the catalyst layer was formed on the conductive substrate having the first layer formed thereon by repeating the cycle of the application step and precursor layer formation step nine times, and the weight of Pt in the second layer was calculated assuming that the weight of the second layer coincided with the sum of Pt and Nd₂O₃ contained in the catalyst layer.

### (Comparative Example 4-1)

As in Comparative Example 3-1, the cathode 104 and the anode 4 were used.

### (Comparative Example 4-2)

As in Comparative Example 3-2, the cathode 105 and the anode 4 were used.

### (Comparative Example 4-3)

As in Comparative Example 3-1, the cathode 106 and the anode 4 were used.

The above-described tests (1) to (3) and (6) and the following test (8) were performed on each example and each comparative example. Results are summarized in Table 4.

### Test (8) Reverse current cycle test 2 simulating 200 pairs of bipolar electrolyzers

Reverse current cycle tests simulating 200 pairs of bipolar electrolyzers were performed using the three-electrode method using a potentiogalvanostat PARSTAT MC 1000 manufactured by Princeton Applied Research as follows.

First, in 200 pairs of bipolar electrolyzers, the average reverse current through each cell after the electrolysis was stopped was calculated to be 15 A/m² by calculation of the equivalent circuit.

Subsequently, the discharge curves at the above current densities of the cathode and the anode described in each example and each comparative example were obtained.

The cathode was cut out into a piece of 18 mm × 17 mm and secured to a PTFE-coated nickel rod with nickel screws. A Pt mesh was used as the counter electrode and a silver-silver chloride (Ag/AgCl) glass electrode was used as the reference electrode. A 34-wt% potassium hydroxide solution was used as the electrolyte. The temperature was adjusted so that the temperature of the electrolyte was 70 °C. First, a reduction current with a current density of -6 kA/m² was conducted for 1 hour, and then an oxidation current with +15 A/m² was immediately conducted, without performing any open circuit voltage measurements between these. At this time, the potential of the cathode gradually increased from the hydrogen generating potential to a noble potential. The conduction of the current was stopped when the cathode potential reached + 1.25 V (vs. RHE). The discharge curve of the cathode was obtained by plotting the absolute value of the accumulated conducted charge amount calculated as the product of the current density and the conduction time on the horizontal axis and the potential of the cathode on the vertical axis.

Next, the anode was cut out into a piece of 18 mm × 17 mm and secured to a PTFE-coated nickel rod with nickel screws. A Pt mesh was used as the counter electrode and a silver-silver chloride (Ag/AgCl) glass electrode was used as the reference electrode. A 34-wt% potassium hydroxide solution was used as the electrolyte. The temperature was adjusted so that the temperature of the electrolyte was 70 °C. First, an oxidation current with a current density of +6 kA/m² was conducted for 1 hour, and then a reduction current with -15 A/m² was immediately conducted, without performing any open circuit voltage measurements between these. At this time, the potential of the anode gradually decreased from the oxygen generating potential to a lower potential. The conduction of the current was stopped when the anode potential reached +0.12 V (vs. RHE). The discharge curve of the anode was obtained by plotting the absolute value of the accumulated conducted charge amount calculated as the product of the current density and the conduction time on the horizontal axis and the potential of the anode on the vertical axis.

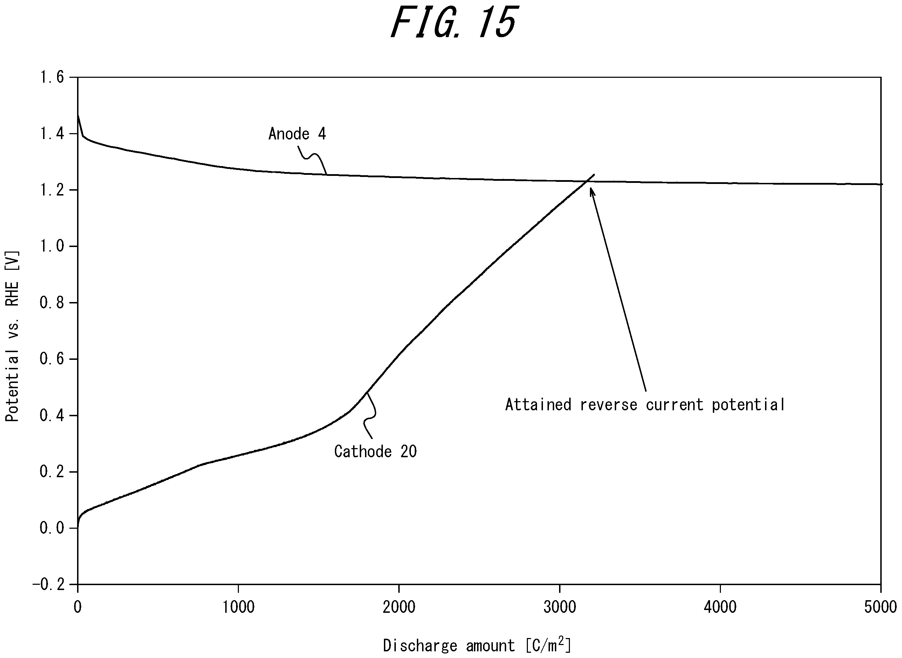

The discharge curves of the cathode and the anode were superimposed, and the potential at which they intersected was identified as the attained reverse current potential caused by interruption of conduction. One example thereof is depicted in FIG. 15.

Reverse current cycle tests were conducted as follows, under the condition of the reverse current density obtained as described above and the attained reverse current potential in the respective examples and comparative examples.

The cathode was cut out into a piece of 18 mm × 17 mm and secured to a PTFE-coated nickel rod with nickel screws. A Pt mesh was used as the counter electrode and a silver-silver chloride (Ag/AgCl) glass electrode was used as the reference electrode. A 34-wt% potassium hydroxide solution was used as the electrolyte. The temperature was adjusted so that the temperature of the electrolyte was 70 °C.

The overvoltage at a current density of -6 kA/m² was measured under these conditions. At this time, the ohmic loss that could not be eliminated by the three-electrode method was measured by an AC impedance method, and the overvoltage was corrected based on the measured value for the ohmic loss. Next, a reduction current with a current density of -6 kA/m² was conducted for 5 hours as a pretreatment for the cathode, and then an oxidation current with +15 A/m² was immediately conducted, without performing any open circuit voltage measurements between these. At this time, the potential of the cathode gradually increased from the hydrogen generating potential to a noble potential. When the cathode potential reached the attained reverse current potential of the respective examples, a reduction current with -6 kA/m² was immediately conducted for 1 minute, without performing any open circuit voltage measurements between these. 2000 reverse current cycles were applied, and each cycle composed of a pair of the oxidation current and the reduction current for 1 minute. After that, the overvoltage at a current density of -6 kA/m² was again measured, and the result was identified as the overvoltage after the reverse current cycle test.

**[Table 4]**

| | | Cathode | | | | | | | | | | | Anode | | (8) Reverse current cycle test 2 simulating 200 pairs | | |
|---|---|---|---|---|---|---|---|---|---|---|---|---|---|---|---|---|---|
| | | Substrate | Pt | Lanthanoid | | Catalyst layer structure | Catalyst weight | Pt weight | (1) Amount of discharge | (2) Electric double layer capacitance | (6)[IPt/ (IPt+IPtO)] | | Type | (3) Amount of discharge | Reverse electric potential | Initial overvoltage | Overvoltage after test |
| | | | Molar ratio | Molar ratio | Element | | [g/m²] | [g/m²] | [C/m²] | [F/m²] | | | | [C/m²] | [Vvs. RHE] | [mV] | [mV] |
| Example4-1 | Cathode 20 | Ni mesh | 75 | 25 | Nd | Pt75Nd25 | 82 | 6.0 | 2930 | 0.038 | 0.027 | Anode 4 | Plasma sprayed and reduced Ni expanded metal | 38000 | 1.22 | 87 | 113 |
| Example4-2 | Cathode4 | Ni mesh | 82 | 18 | Nd | Pt75Nd25/Pt75Ni25 | 8.0 | 6.0 | 2810 | 0.041 | 0.221 | Anode 4 | Plasma sprayed and reduced Ni expanded metal | 38000 | 1.22 | 95 | 98 |
| Example4-3 | Cathode21 | Ni mesh | 78 | 22 | Nd | Pt75Nd25/Pt75Ni25 | 7.9 | 5.9 | 2880 | 0.042 | 0.188 | Anode 4 | Plasma sprayed and reduced Ni expanded metal | 38000 | 1.22 | 93 | 95 |
| Example4-4 | Cathode 22 | Ni mesh | 86 | 14 | Nd | Pt75Nd25/Pt75Ni25 | 7.9 | 6.1 | 2730 | 0.041 | 0.233 | Anode 4 | Plasma sprayed and reduced Ni expanded metal | 38000 | 122 | 98 | 95 |
| Comp. Ex. 4-1 | Cathode 101 | Ni mesh | 100 | 0 | - | Pt | 5.8 | 5.4 | 660 | 0.018 | 1000 | Anode 4 | Plasma sprayed and reduced Ni expanded metal | 38000 | 1.22 | 91 | 353 |
| Comp. Ex. 4-2 | Cathode 107 | Ni mesh | 75 | 25 | Ce | Pt75Ce25 | 8.3 | 6.0 | 3920 | 0.056 | 0.027 | Anode 4 | Plasma sprayed and reduced Ni expanded metal | 38000 | 1.22 | 95 | 332 |
| Comp. Ex. 4-3 | Cathode 108 | Ni mesh | 82 | 18 | Ce | Pt75Ce25/Pt75Ni25 | 76 | 5.7 | 4120 | 0.056 | 0.066 | Anode4 | Plasma sprayed and reduced Ni expanded metal | 38000 | 1.22 | 84 | 267 |

When Examples 4-1 and 4-2 are compared with Comparative Examples 4-1 to 4-3, the results in Test (8) were generally similar to those of Examples 3-1 and 3-2 and Comparative Examples 3-1 to 3-3 in Test (7).

From these results and Examples 4-3 and 4-4, it was discovered that a cathode with a catalyst layer containing Pt element and a lanthanoid element that is electrochemically stable as trivalent ions within the potential window of water of pH 7 or higher and pH 16 or lower in the molar ratio specified by the present disclosure can maintain high energy conversion efficiency for a long period of time in the 200 pair of electrolyzer for alkaline water electrolysis, including 199 bipolar electrolytic cells for water electrolysis. It was also discovered that the value of [IPt / (IPt + IPtO)] is more preferably 0.1 or more, where IPt represents the peak area of X-rays diffracted by the (111) plane of Pt metal in the catalyst layer and IPtO represents the peak area of X-rays diffracted by the (200) and (111) planes of PtO.

### INDUSTRIAL APPLICABILITY

According to the present disclosure, it is possible to provide a cathode for generating hydrogen that maintains high energy conversion efficiency over a long period of time without an increase in overvoltage even when hydrogen generation is repeatedly started and stopped.

### REFERENCE SIGNS LIST

- 1: Partition wall
- 2: Electrode
- 2a: Anode
- 2c: Cathode
- 2e: Elastic body
- 2r: Current collector
- 3: Outer frame
- 4: Diaphragm
- 5: Electrode compartment
- 5a: Anode compartment
- 5c: Cathode compartment
- 5i: Electrolyte inlet
- 5o: Electrolyte outlet
- 6: Rib
- 7: Gasket
- 8: PFA resin-coated Pt wire
- 9a: Nozzle
- 9b: Cap nut
- 9c: PTFE plate
- 9d: EPDM plate
- 10: Header
- 10o: External header
- 10ai: Anode inlet header
- 10ao: Anode outlet header
- 10ci: Cathode inlet header
- 10co: Cathode outlet header
- 50: Bipolar electrolyzer
- 51g: Fast head, loose head
- 51i: Insulating plate
- 51a: Anode terminal element
- 51c: Cathode terminal element
- 51r: Tie rod
- 60: Bipolar element
- 65: Electrolytic cell
- 70: Electrolysis device
- 71: Liquid feed pump
- 72: Gas-Liquid separation tank
- 74: Rectifier
- 75: Oxygen concentration meter
- 76: Hydrogen concentration meter
- 77: Flow meter
- 78: Pressure gauge
- 79: Heat exchanger
- 80: Pressure control valve
- Z: Zero-gap structure

## Claims

1. A cathode for generating hydrogen comprising:
a conductive substrate; and
a catalyst layer including, on a surface of the conductive substrate:
at least one of Pt, a Pt oxide, and a Pt hydroxide; and
at least one of a metal, an oxide, and a hydroxide of a lanthanoid element that becomes electrochemically stable as trivalent ions within a potential window of water of pH 7 or higher and pH 16 or lower,
wherein a molar ratio of the Pt element to the lanthanoid element (Pt:lanthanoid) in the catalyst layer is 95:5 to 65:35.

2. The cathode according to claim 1, being a cathode for alkaline water electrolysis.

3. The cathode according to claim 1 or 2, wherein the catalyst layer contains the same element as that contained in the conductive substrate.

4. The cathode according to claim 1 or 2, wherein the catalyst layer comprises a first layer formed on the surface of the conductive substrate and a second layer formed on the first layer, the molar ratio of Pt and the lanthanoid element in the first layer being different from that in the second layer.

5. The cathode according to claim 4, wherein a molar ratio of the lanthanoid element in the second layer is greater than the molar ratio of the lanthanoid element in the first layer.

6. The cathode according to claim 4 or 5, wherein the first layer contains the same element as that contained in the conductive substrate.

7. The cathode according to claim 1 or 2, wherein a value of [IPt / (IPt + IPtO)] is 0.1 or more, where IPt represents a peak area of X-rays diffracted by the (111) plane of Pt metal and IPtO represents a peak area of X-rays diffracted by the (200) and (111) planes of PtO in the catalyst layer.

8. The cathode according to claim 1 or 2, wherein the lanthanoid element is at least one of Nd, Sm, Gd, Tb, and Dy.

9. The cathode according to claim 8, wherein the lanthanoid element is Nd.

10. The cathode according to claim 1 or 2, wherein the conductive substrate contains Ni.

11. The cathode according to claim 10, wherein the conductive substrate is a plain weave mesh of 20 mesh or more and 60 mesh or less woven with Ni fine wire having a wire diameter of 0.05 mm or more and 1.00 mm or less.

12. The cathode according to claim 10, wherein the conductive substrate is Ni foil having a thickness of 100 µm or less.

13. The cathode according to claim 10, wherein the catalyst layer contains Pt, Nd, and Ni.

14. The cathode according to claim 13, wherein the catalyst layer includes the first layer containing Pt and Nd and the second layer containing Pt and Ni.

15. The cathode according to claim 1 or 2, wherein a loading amount of the catalyst layer is 4.5 g/m² or more and 20 g/m² or less.

16. The cathode according to claim 1 or 2, wherein a loading amount of the Pt element in the catalyst layer is 3.5 g/m² or more and 15 g/m² or less.

17. The cathode according to claim 1 or 2, wherein the catalyst layer contains a hydrogen storage alloy.

18. The cathode according to claim 17, wherein the catalyst layer contains Pd.

19. The cathode according to claim 1 or 2, wherein an accumulated discharge amount until a potential reaches +1.12 V (vs. RHE) until a reduction current of 6 kA/m² is conducted for 1 hour and then an oxidation current of 15 A/m² is conducted is 1500 C/m² or more and 10000 C/m² or less.

20. The cathode according to claim 1 or 2, wherein an electric double layer capacitance is 0.01 F/cm² or more and 0.15 F/cm² or less.

21. A method of producing the cathode according to claim 1 or 2, comprising the step of repeating the following twice or more times in sequence:
an application step of applying a coating liquid containing at least a Pt compound and a lanthanoid compound to the conductive substrate;
a precursor layer formation step of drying the coating liquid to form a precursor layer containing Pt and a lanthanoid on the conductive substrate; and
a sintering step of heating the precursor layer in a temperature range of 300 °C to 800 °C to obtain a catalyst layer.

22. A method of producing the cathode according to claim 4, comprising the steps of:
performing a first step comprising repeating the following twice or more times in sequence:
a first application step of applying a first coating liquid containing at least a Pt compound and a lanthanoid compound to the conductive substrate;
a first precursor layer formation step of drying the first coating liquid to form a first precursor layer containing Pt and a lanthanoid on the conductive substrate; and
a first sintering step of heating the first precursor layer in a temperature range of 300 °C to 800 °C to obtain the first layer, and
after the first step, performing a second step comprising repeating the following twice or more times in sequence:
a second application step of applying a second coating liquid containing at least the Pt compound and the lanthanoid compound in a molar ratio different from that in the first layer, on the conductive substrate having the first layer formed thereon;
a second precursor layer formation step of drying the second coating liquid to form a second precursor layer containing Pt and the lanthanoid in a molar ratio different from that in the first layer, on the first layer; and
a second sintering step of heating the second precursor layer in a temperature range of 300 °C to 800 °C to obtain a second layer.

23. A method of producing the cathode according to claim 14, comprising the steps of:
performing a first step comprising repeating the following twice or more times in sequence:
a first coating step of applying a first coating liquid containing at least a Pt compound and Ni to the conductive substrate containing Ni;
a first precursor layer formation step of drying the first coating liquid to form a first precursor layer containing Pt and Ni on the conductive substrate; and
a first sintering step of heating the first precursor layer in a temperature range of 300 °C to 800 °C to obtain the first layer, and
after the first step, performing a second step comprising repeating the following twice or more times in sequence:
a second coating step of applying a second coating liquid containing at least a Pt compound and a Nd compound on the conductive substrate having the first layer formed thereon;
a second precursor layer formation step of drying the second coating liquid to form a second precursor layer containing Pt and Nd on the first layer; and
a second sintering step of heating the second precursor layer in a temperature range of 300 °C to 800 °C to obtain a second layer.

24. A bipolar electrolytic cell comprising the cathode according to claim 1 or 2.

25. The bipolar electrolytic cell according to claim 24, comprising
the cathode and an anode,
wherein an accumulated discharge amount until a potential reaches +0.12 V (vs. RHE) until an oxidation current of 6 kA/m² is conducted for 1 hour and then a reduction current of 15 A/m² is conducted to the anode is greater than the accumulated discharge amount until the potential reaches + 1.12 V (vs. RHE) until an oxidation current of 6 kA/m² is conducted for 1 hour and then a reduction current of 15 A/m² is conducted to the cathode.

26. The bipolar electrolytic cell according to claim 25, wherein the accumulated discharge amount until the potential reaches +0.12 V (vs. RHE) until an oxidation current of 6 kA/m² is conducted for 1 hour and then a reduction current of 15 A/m² is conducted to the anode is 10000 C/m² or more and 300000 C/m² or less.

27. The bipolar electrolytic cell according to claim 24, wherein the anode contains Ni.

28. An electrolyzer for alkaline water electrolysis, comprising:
3 to 200 bipolar electrolytic cells according to claim 24;
at least one cathode terminal cell; and
at least one anode terminal cell.

29. A method of producing hydrogen, comprising electrolyzing water containing alkali using the electrolyzer for alkaline water electrolysis according to claim 28.

30. The method of producing hydrogen according to claim 29, comprising producing hydrogen by electrolyzing the water containing alkali relying on a variable power supply in which positive current conduction and interruption of the positive current conduction are repeated.
